# NEUE EUROPÄISCHE PATENTSCHRIFT

(11) **EP 1 464 860 B2**
(45) Veröffentlichungstag und Bekanntmachung des Hinweises auf die Entscheidung über den Einspruch: **25.07.2012**
(45) Hinweis auf die Patenterteilung: 28.12.2005
(21) Anmeldenummer: 04007765.3
(22) Anmeldetag: 31.03.2004
(51) Int. Cl.: F16D 21/06, F16D 25/10, F16D 25/0638

(54) **Doppelkupplungseinrichtung und Radiallagerungskonzept hierfür**
Double clutch arrangement with radial bearing concept
Embrayage double avec concept de palier radial

(30) Priorität: 01.04.2003 DE 10314888; 17.03.2004 DE 102004012949; 30.03.2004 DE 102004016061; 31.03.2004 DE 102004015927
(43) Veröffentlichungstag der Anmeldung: 06.10.2004
(73) Patentinhaber: ZF Friedrichshafen AG, 80846 Friedrichshafen (DE)
(72) Erfinder: Kundermann, Wolfgang, 97422 Schweinfurt (DE); Grosspietsch, Wolfgang, 97422 Schweinfurt (DE); Kraus, Paul, 97464 Niederwerrn (DE); Stampf, Volker, 97422 Schweinfurt (DE)

(56) Entgegenhaltungen:
- EP-A1- 1 226 992
- DE-A- 10 114 281
- DE-A1- 2 931 515
- DE-A1- 10 231 405
- DE-C2- 19 800 490
- FR-A- 2 815 093
- GB-A- 2 036 203
- US-A- 3 185 274
- US-A- 3 823 802

## Beschreibung

Die Erfindung bezieht sich auf eine Doppelkupplungseinrichtung, welche zwischen einer Antriebseinheit und einem Getriebe mit zugehörigem Getriebegehäuse angeordnet ist, wobei die Doppelkupplungseinrichtung ein Kupplungsgehäuse, welches mit dem Getriebegehäuse verbunden ist oder dieses umfasst, aufweist und wobei zwischen dem Kupplungsgehäuse und einer Radiallageranordnung der Doppelkupplungseinrichtung eine Toleranzausgleichsvorrichtung vorgesehen ist und wobei ein Lagersitz einer zweiten Lageranordnung der Kupplungseinrichtung vom Getriebegehäuse gebildet wird oder mit diesem fest verbunden ist.

Es sind bereits Doppelkupplungseinrichtungen bekannt, (z. B. DE 101 14 281 A1), bei denen die Kupplungseinrichtung mittels einer Radiallageranordnung in einer Öffnung einer am Kupplungsgehäuse abgestützten Verschlusswandung gelagert ist. Diese Verschlusswandung ist mittels einer Dichtelementanordnung und einer Axialsicherung axial fest am Kupplungsgehäuse angeordnet. Weiterhin sind zweite Lageranordnungen zwischen einer Ölzuführnabe und einer äußeren Getriebeeingangswelle vorgesehen, welche die Kupplungseinrichtung auf der Getriebewelle lagern. Eine Axialsicherung der Kupplungseinrichtung ist dermaßen vorgesehen, dass die Nabe des Innenlamellenträgers der radial äußeren Kupplungseinrichtung mittels eines Sicherungsringes, welcher auf der die Nabe aufnehmenden Verzahnung der äußeren Getriebeeingangswelle angeordnet ist, gegen ein Verschieben in Richtung Antriebseinheit gesichert ist und einer Axiallageranordnung, welche zwischen der Nabe des Innenlamellenträgers der inneren Kupplungseinrichtung und der Nabe des Innenlamellenträgers der äußeren Kupplungseinrichtung angeordnet ist und die sich am axialen Ende der äußeren Getriebeeingangswelle axial abstützt, gegen ein Verschieben in Richtung Getriebe gesichert ist. Nachteilig bei der hier offenbarten Ausgestaltung der Lagerung und der Axialsicherung der Doppelkupplungseinrichtung sind zum einen die Wellenbelastung, welche von Kurbelwellentaumeln und Achsversatz zwischen Ankoppelglied der Kupplungseinrichtung und Ausgangsseite des Torsionsdämpfers oder Abtriebseinheit resultieren und über die zwischen Getriebewellen und Ölzufuhrnabe angeordneten Radiallager auf die Getriebewellen übertragen werden, von den Radiallagern. Weiterhin sind durch diese Anordnung der getriebeseitigen Radiallagerung aufwendige Axialbohrungen in der Ölzufuhrnabe notwendig, um Kühlöl axial in die Doppelkupplungseinrichtung einzuleiten. Weiterhin ist durch die dargestellte Art der Axialsicherung ein zweiteiliger Aufbau der Doppelkupplungseinrichtung zur Realisierung der Montage nötig, da nach Einfädeln der Doppelkupplungseinrichtung auf den Getriebeeingangswellen der Sicherungsring auf der inneren Getriebeeingangswelle bei offener Kupplungseinrichtung montiert werden muss, und erst anschließend der Mitnehmer mit angeschweißtem Ankoppelglied im Außenlamellenträger der Außenkupplung drehfest montiert werden kann.

Eine Doppelkupplungseinrichtung nach dem Oberbegriff von Anspruch 1 ist aus DE 102 31 405 A1 bekannt.

Hiervon ausgehend ist es Aufgabe der Erfindung die Lagerung der Kupplungseinrichtung derart weiterzubilden, dass Wellenbelastungen minimiert werden und eine Montage der Kupplungseinrichtung vereinfacht wird.

Demgegenüber wird nach einem ersten Aspekt der Erfindung vorgeschlagen, dass die Kupplungseinrichtung durch eine erste Radiallageranordnung zwischen der Verschlusswandung und dem Ankoppelglied und durch eine zweite Radiallageranordnung, deren erster Lagersitz mit dem Ankoppelglied drehfest verbunden, und deren zweiter Lagersitz vom Getriebegehäuse gebildet oder mit diesem fest verbunden ist, gelagert wird, wobei zwischen der ersten Radiallageranordnung und dem Kupplungsgehäuse eine Toleranzausgleichseinrichtung vorgesehen ist.

Vorteilhaft bei dieser Form der Lagerung der Doppelkupplungseinrichtung ist, dass die Kupplungseinrichtung fest gegenüber dem Getriebegehäuse lagerbar ist, wodurch keine Radialkräfte auf die Getriebeeingangswellen wirken. Ein Achsversatz einer Ausgangsseite eines Torsionsschwingungsdämpfers kann kein Kippmoment mehr erzeugen, welches über eine Lageranordnung auf der äußeren Getriebeeingangswelle zu einer Wellenbelastung der Getriebeeingangswellen führt. Durch eine Toleranzausgleichsvorrichtung, welche zwischen der ersten Radillageranordnung und dem Kupplungsgehäuse vorgesehen ist, kann vorteilhafterweise ein axialer Versatz der Kupplungseinrichtung gegenüber den Getriebeeingangswellen und dem Getriebegehäuse, welcher durch Toleranzen bedingt ist, derart ausgeglichen werden, dass die Lagersitze der ersten Radiallageranordnung, welche kupplungsseitig vom Ankoppelglied und gehäuseseitig von der Verschlusswandung gebildet werden, sich im Wesentlichen radial direkt gegenüberliegen.

Die Erfindung sieht vor, die Toleranzausgleichsvorrichtung zwischen dem Kupplungsgehäuse und dem radial äußeren Rand der Verschlusswandung anzuordnen. Vorteilhaft hierbei ist, dass die Toleranzausgleichsvorrichtung nach erfolgter Montage der Verschlusswandung erfolgen kann. Damit ist eine exakte Bestimmung der Toleranzlage der Kupplungseinrichtung gegenüber dem Kupplungsgehäuse möglich und somit eine toleranzabhängige Ausinrahl einer Toleranzausgleichsvorrichtung. Vorzugsweise wird die Toleranzausgleichsvorrichtung direkt zwischen dem radialen Randbereich der Verschlusswandung und einem Sicherungselement, welches in einer das Sicherungselement aufnehmenden Aussparung, vorzugsweise Nut am Innenumfang des Kupplungsgehäuses und welches eine axiale Verschiebung der Verschlusswandung in zumindest eine Richtung, vorzugsweise in Richtung Antriebseinheit, begrenzt, angeordnet. Vorzugsweise ist die Toleranzausgleichsvorrichtung als eine Tellerfeder, welche in ihrer Einbaulage einen axialen Federweg zulässt oder in Form von Ausgleichsscheiben ausgebildet, wobei natürlich auch eine Kombination von einer oder mehreren Tellerfedern und Ausgleichsscheiben möglich ist, um die Verschlusswandung in Abhängigkeit der Toleranzlage der Kupplungseinrichtung axial genau einzustellen.

Nach einem weiteren wesentlichen Merkmal der Erfindung ist die zweite Lageranordnung als Radiallager ausgebildet, vorzugsweise als Wälzlager mit geringer radialer Ausdehnung, höchstvorzugsweise als Nadellager.

Eine besonders günstige Ausgestaltung der zweiten Lageranordnung sieht zudem vor, die Lageranordnung als Loslager ohne zusätzliche axiale Sicherungselemente auszugestalten. Vorteilhaft zur Montage der Kupplungseinrichtung ist hierbei ein zweiteiliger Aufbau des Nadellagers, wobei der radial äußere Laufring vor der Montage der Kupplungseinrichtung bereits in den feststehenden ersten Lagersitz, welcher vorzugsweise vom Getriebe- bzw. Kupplungsgehäuse oder einem mit dem Getriebe- bzw. Kupplungsgehäuse fest verkoppelten Bauteil gebildet wird, eingepresst wird und der innere Laufring des Nadellagers fest auf einem zweiten Lagersitz, welcher vorzugsweise am axial dem Ankoppelglied entgegengesetzt äußeren Ende des mit dem Ankoppelglied drehfest verbundenen Bauteil, vorzugsweise einer Ölzufuhrnabe, aufgepresst ist. Bei Montage der Kupplungseinrichtung erfolgt dann das axiale Einführen des inneren Laufrings, welcher gegebenenfalls mit einer Einfädelschräge ausgebildet ist in den Nadelkranz, welcher im äußeren Laufring axial fest angeordnet ist. Eine weitere vorteilhafte Ausgestaltung der Lageranordnung weist ein Gleitlager auf welches vor der Montage der Kupplungseinrichtung fest im getriebeseitigen Lagersitz eingepresst ist, und wobei die Gegengleitfläche vorzugsweise vom axialen Ende der Ölzufuhrnabe gebildet wird und hierzu geschliffen und gehärtet ausgebildet sein kann.

Nach einem weiteren wesentlichen Merkmal der Erfindung ist die erste Radiallageranordnung derart ausgebildet, dass sie als eine erste Axialsicherung der Kupplungseinrichtung dient. Vorteilhaft hierbei ist, dass damit auf eine separate Axialsicherung auf einem Wellenende einer Getriebeeingangswelle zur Axialsicherung der Kupplungseinrichtung gegen ein Verschieben dieser in Richtung Antriebseinheit verzichtet werden kann, welches einen zweiteiligen Aufbau der Kupplungseinrichtung insofern erfordert, da nach Montage der Kupplungsanordnungen auf den Getriebewellen zuerst die Axialsicherung montiert werden muss, bevor das Ankoppelglied drehfest mit dem ersten Bauteil verbunden werden kann. Erfindungsgemäß dient die erste Radiallageranordnung als eine Axialsicherung der Kupplungseinrichtung gegen ein Verschieben der Kupplungseinrichtung in Richtung Antriebseinheit. Vorteilhaft hierbei ist, dass sich die Kupplungseinrichtung nicht gegen die Getriebewellen abstützt sondern über die Radiallageranordnung mittelbar am Kupplungsgehäuse. Vorzugsweise ist die erfindungsgemäße Axialsicherung der Kupplungseinrichtung mittels der Toleranzausgleichsvorrichtung elastisch ausgebildet, sodass auch bei ungünstigen Toleranzlagen der Kupplungseinrichtung bezüglich dem Kupplungsgehäuse kein axiales Spiel, bzw. axiale Zwangskräfte zwischen der ersten Radiallageranordnung und der Verschlusswandung ergibt. Höchstvorzugsweise stützt sich dazu die Kupplungseinrichtung über die erste Radiallageranordnung, die Verschlusswandung, die Toleranzausgleichsvorrichtung und dem zugehörigem Sicherungselement gegen das Kupplungsgehäuse ab.

Nach einem weiteren wesentlichen Merkmal der Erfindung ist zur einfacheren Montage der Kupplungseinrichtung die erste Radiallageranordnung als ein Schrägkugellager ausgebildet, wobei der radial äußere Laufring in einem Lagersitz des Ankoppelgliedes, oder mit diesem fest verbundenem Bauteil eingepresst ist und der innere Laufring in einem Lagersitz, welcher von einem axial verlaufendem Randbereich der Verschlusswandung gebildet wird, eingepresst ist. Alternativ kann auch die Verwendung eines Gleitlagers in Form einer Bundbuchse vorteilhaft sein, wobei der äußere Lagersitz der Bundbuchse vor der Montage der Kupplungseinrichtung in einen zylinderartig ausgestalteten Bereich der Verschlusswandung oder des Ankoppelgliedes eingepresst wird. Vorteilhaft bei beiden Ausgestaltungen ist, dass das Schrägkugellager, bzw. die Bundbuchse sowohl zur Radiallagerung sowie zu einer Axialsicherung der Kupplungseinrichtung dient und ein zusätzliches Sicherungselement und der dazu nötige Montageschritt wegfällt. Eine weitere günstige Ausgestaltung der erfindungsgemäßen Axialsicherung der Kupplungseinrichtung sieht eine Ausgestaltung der ersten Radiallageranordnung in Form eines Rillenkugellagers vor, welches mit einem Laufring in der Verschlusswandung und mit dem anderen Laufring auf das Ankoppelglied gepresst ist. Zur Montage der Kupplungseinrichtung wird das Rillenkugellager mittels einer Montagehilfe, welche axial auf den Innenring des Rillenkugellagers drückt oder diesen gegenhält, auf den jeweilig anderen Lagersitz gepresst. Eine vorteilhafte Ausgestaltung der Anordnung und der Montage des Rillenkugellagers sieht vor, dieses mittels dessen Außenring vor Montage der Kupplungseinrichtung in die Verschlusswandung einzupressen, und bei Montage der Kupplungseinrichtung die Verschlusswandung mitsamt Lageranordnung mittels einer Montagehilfe, welche auf den Innenring des Rillenkugellagers drückt auf das Ankoppelglied zu pressen. Eine bevorzugte Ausgestaltung der Montagehilfe sieht vor, diese mit einem Koppelmechanismus zu versehen, welcher mit dem Ankoppelglied der Kupplungseinrichtung dermaßen verbunden werden kann, dass dieses relativ zur Montagehilfe axial gesichert ist. Vorzugsweise kann das Ankoppelglied mit mindestens einer mit einem Gewinde versehenen Bohrung ausgestattet sein, in welche eine Schraube der Montagehilfe eingedreht werden kann und damit beim Aufpressen der ersten Lageranordnung eine in Richtung Antriebseinheit gerichtete Gegenkraft aufgebracht werden kann. Weiterhin kann das Ankoppelglied auch mit einer radialen Nut ausgestaltet sein, in welche korrespondierende Haken der Montagehilfe eingreifen können und über die Nutwand das Ankoppelglied axial gegengehalten werden kann. Eine weitere günstige Ausgestaltung der Anordnung und der Montage des Rillenkugellagers sieht vor, dieses mittels dessen Außenring vor Montage der Kupplungseinrichtung in einen zylinderförmig ausgestalteten Bereich des Ankoppelglieds einzupressen und bei Montage der Kupplungseinrichtung die Verschlusswandung mittels einer Montagehilfe, welche sich am Innenring des Rillenkugellagers abund diesen in Richtung Antriebseinheit gegenhält, in die Verschlusswandung einzupressen.

Nach anschließend erfolgter Montage der Toleranzausgleichsvorrichtung und axialer Sicherung derer ist die Kupplungseinrichtung ebenfalls axial gesichert und radial im Kupplungsgehäuse gelagert. Vorteilhaft bei Verwendung eines Rillenkugellagers ist die damit verbundene Möglichkeit, die Kupplungseinrichtung in beide Richtungen vermittels der Radiallageranordnung axial zu sichern. Weiterhin kann die Kupplungseinrichtung eingangsseitig mittels eines nicht oder nur einseitig eingepressten Rillenkugellagers radial im Kupplungsgehäuse gelagert werden, wobei dann zur Realisierung der Axialsicherung der Kupplungseinrichtung vermittels der ersten Lageranordnung das Rillenkugellager mit Sicherungselementen, vorzugsweise Sicherungsringen welche in Nuten im Ankoppelglied oder/und Verschlusswandung angeordnet sind, axial gesichert werden muss. Erfindungsgemäß sind die beiden Radiallageranordnungen auf axial entgegengesetzten Seiten der Kupplungseinrichtung angeordnet. Vorteilhaft hierbei ist die komplette Radiallagerung der Kupplungseinrichtung im Getriebegehäuse, bzw. Kupplungsgehäuse, sodass keine weiteren Radiallagerungen benötigt werden: Erfindungsgemäß ist die zweite Lageranordnung als Nadellager ausgebildet. Vorteilhaft hierbei ist, das die Lageranordnung als sogenanntes Loslager ausgebildet werden kann, wodurch keine Axialsicherung der Kupplungseinrichtung über die Lageranordnung stattfindet. Die Wälzkörper des Nadellagers können sich somit auf der inneren Lauffläche, welche durch den Innenring oder durch die Ölzufuhrnabe selbst gebildet wird, axial verschieben, sodass vor Montage der Kupplungseinrichtung der innere Laufring auf der Ölzufuhrnabe aufgepresst werden kann, und der äußere Laufring in das Getriebegehäuse eingepresst werden kann. In einer weiteren vorteilhaften Ausgestaltung der Erfindung kann der äußere Laufring auch in ein mit dem Getriebegehäuse fest verkoppeltes weiteres stationäres Bauteil, wie zum Beispiel einem Pumpengehäuse einer Hydraulikpumpe oder ein Gehäuse einer hydraulischen Steuereinrichtung eingepresst werden. Weiterhin ist bei der erfindungsgemäßen Ausgestaltung der Lageranordnung als Nadellager die geringe radiale Bauhöhe vorteilhaft, welche es ermöglicht, das Lager axial außerhalb der eigentlichen Ölzufuhrnabe dermaßen anzuordnen, dass der radial äußere Lagersitz auf einem radial geringeren Durchmesser sitzt als der Außendurchmesser der Ölzufuhrnabe.

Die erfindungsgemäße Ausgestaltung der Kupplungseinrichtung sieht eine feste Verbindung des Mitnehmers mit dem Außenlamellenträger der radial äußeren Kupplungsanordnung vor. Erfindungsgemäß ist der Mitnehmer dazu mit dem Lamellenträger verschweißt. Vorteilhaft hierbei gegenüber lediglich gesteckten drehfesten Verbindungen ist, dass der Mitnehmer gegen ein Verkippen bezüglich des Lamellenträgers gesichert ist. Damit kann die zweite Lageranordnung aus nur einem Lager bestehen, da die Drehachse der mit dem Mitnehmer verkoppelten Lamellenträger und Ölzufuhrnabe nicht mehr mittels eines zweiten Lagers stabilisiert werden muss.

Eine besonders bevorzugte Ausgestaltung der Kupplungseinrichtung sieht vor, dass zwischen dem Lamellenträger und dem Mitnehmer ein Ringelement, welches mit dem Lamellenträger und dem Mitnehmer verschweißt ist, angeordnet ist. Vorteilhaft hierbei ist, dass das Ringelement unabhängig vom Lamellenträger derart ausgetaltet werden kann, dass das Ringelement einen radialsymetrischen Bereich mit konstantem Radius zur Drehachse aufweist, welcher beim Verschweißen des Mitnehmers am Ringelement eine durchgehende Schweißnaht ermöglicht.

Bevorzugte Ausführungsbeispiele der Erfindung sind in den Figuren dargestellt.

Es zeigt:
- Fig. 1: eine erfindungsgemäße Ausgestaltung einer Doppelkupplungseinrichtung
- Fig. 2: die Doppelkupplungseinrichtung aus Fig.1 mit einer alternativen Ausgestaltung der ersten Lageranordnung:
- Fig. 3: die Doppelkupplungseinrichtung aus Fig.2 mit einer alternativen Ausgestaltung der Ölzufuhrnabe.
- Fig. 4: die Doppelkupplungseinrichtung aus Fig.3 mit einer symbolhaft dargestellten Montagehilfe.
- Fig. 5: die Doppelkupplungseinrichtung aus Fig.1 mit einer alternativen Ausgestaltung der zweiten Lageranordnung.
- Fig. 6: die Doppelkupplungseinrichtung aus Fig.1 mit einer alternativen Ausgestaltung der ersten und zweiten Lageranordnung.
- Fig. 7: die Doppelkupplungseinrichtung aus Fig.1 mit einer alternativen Ausgestaltung der ersten Lageranordnung.
- Fig. 8: die Doppelkupplungseinrichtung aus Fig.7 mit einer alternativen Ausgestaltung der ersten Lageranordnung.
- Fig. 9: die Doppelkupplungseinrichtung aus Fig.1 mit einer zusätzlichen Lageranordnung der inneren Getriebeeingangswelle.
- Fig. 10: die Doppelkupplungseinrichtung aus Fig.7 mit einer zusätzlichen Lageranordnung der inneren Getriebeeingangswelle.
- Fig.11a: eine alternative Ausgestaltung der ersten Lageranordnung und eine schematisch dargestellte Montagehilfe.
- Fig.11b: die fertig montierte erste Lageranordnung aus Fig. 11a.
- Fig.12: die erste Lageranordnung aus Fig. 11a und eine schematisch dargestellte alternative Montagehilfe.
- Fig. 13: einen Außenlamellenträger der Doppelkupplungseinrichtung
- Fig. 14: eine Ausgestaltung des Mitnehmers der Doppelkupplungseinrichtung
- Fig. 15: den Außenlamellenträger aus Fig. 13 mit angeflanschtem Mitnehmer aus Fig. 14.
- Fig. 16: eine alternative Ausgestaltung des Außenlamellenträgers und Mitnehmers im Zusammenbau
- Fig. 17a, 17b, 17c, 17d: alternative Ausgestaltungen des Außenlamellenträgers und schematische Montagemöglichkeiten.
- Fig.18: die Doppelkupplungseinrichtung aus Fig.3 mit einer alternativen Ankopplung des Mitnehmers
- Fig. 19: eine Teilansicht des Ringelementes aus Fig. 18
- Fig. 20: ein dreidimensionales Schnittbild aus Fig.18
- Fig 21: eine vergrößerte Teilansicht des Ankoppelbereiches aus Fig.20
- Fig. 22: die Doppelkupplungseinrichtung aus Fig.3 mit einer weiteren alternativen An kopplung des Mitnehmers
- Fig. 23: ein dreidimensionales Schnittbild aus Fig.22
- Fig. 24: die Doppelkupplungseinrichtung aus Fig.3 mit einer weiteren alternativen An kopplung des Mitnehmers
- Fig. 25: die Doppelkupplungseinrichtung aus Fig.3 mit einer weiteren alternativen An kopplung des Mitnehmers
- Fig. 26: die Doppelkupplungseinrichtung aus Fig.3 mit einer alternativen Ausgestaltung und Anordnung der zweiten Lageranordnung
- Fig. 27a, 27b: eine weitere alternative Ausgestaltung des Ringelementes und Ankopplung des Mitnehmers gemäß Fig.24
- Fig. 28: eine Teilansicht des Ringelementes aus Fig.27b

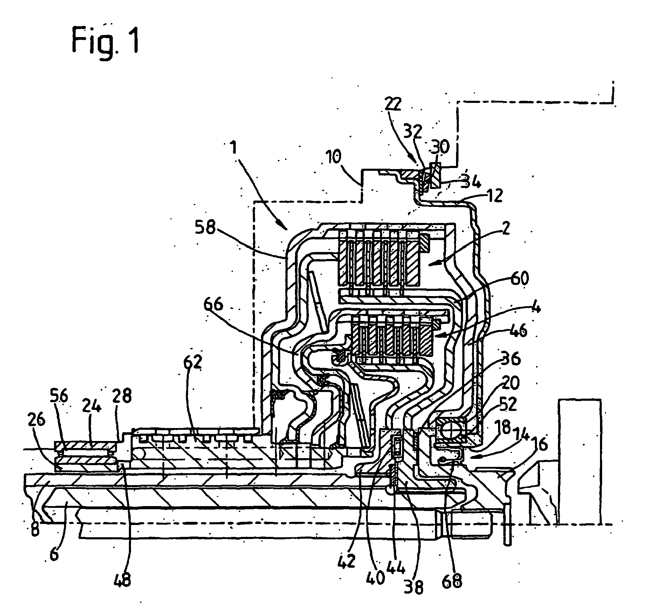

In Fig. 1 ist eine erfindungsgemäße Doppelkupplungsanordnung dargestellt. Die Doppelkupplungseinrichtung besteht im wesentlichen aus den beiden Kupplungsanordnungen 2 und 4. Hierbei ist die äußere Kupplungsanordnung 2 über ihren Innenlamellenträger und der Nabe des Innenlamellenträgers 38 mit der inneren Getriebeeingangswelle 6, welche als Hohlwelle ausgebildet ist, verbunden. Die zweite Kupplungsanordnung 4, welche radial innerhalb der ersten Kupplungsanordnung 2 angeordnet ist, ist mittels ihrem Innenlamellenträger und der Nabe des Innenlamellenträgers 42 mit der äußeren Getriebeeingangswelle 8, welche als Hohlwelle ausgebildet ist, verbunden. Das Drehmoment, welches von einer nicht dargestellten Antriebseinheit erzeugt wird und über einen ebenfalls nicht dargestellten Torsionsschwingungsdämpfer geleitet wird, wird über das Ankoppelglied 16, welches mit einer Außenverzahnung zur Aufnahme der Sekundärseite des Torsionsschwingurandämpfers ausgestattet ist, in die Doppelkupplungseinrichtung 1 eingeleitet. Das Drehmoment kann sodann über das Ankoppelglied 16, den mit dem Ankoppelglied 16 verschweißten Mitnehmer 46 über den Außenlamellenträger 58 der ersten Kupplungsanordnung 2 auf die Ölzufuhrnabe 62, und von dieser auf den Außenlamellenträger 66 der zweiten Kupplungsanordnung 4 übertragen werden. Der Mitnehmer 46 ist an seinem Außenumfang drehfest und spielfrei mit dem Außenlamellenträger 58 verschweißt. Die Kupplungseinrichtung 1 wird über zwei Radiallageranordnungen 20, 24 im Getriebegehäuse, bzw. Kupplungsgehäuse 10 gelagert. Die erste Lageranordnung 20 ist als Schrägkugellager 52 ausgebildet. Hierbei ist der Außenring des Schrägkugellagers 52 in einen axialen Abschnitt des Mitnehmers 46 eingepresst und der Innenring des Schrägkugellagers auf einen dafür vorgesehenen Lagersitz einer Verschlusswandung 12. Die Verschlusswandung 12 ist an ihrem Außenumfang über eine Toleranzausgleichsvorrichtung 22 axial elastisch im Kupplungsgehäuse 10 angeordnet. Die Toleranzausgleichsvorrichtung 22 besteht im wesentlichen aus einer Toleranzausgleichsscheibe 32 und einem Federelement 30, welches als Tellerfeder ausgebildet ist. Das Federelement 30 stützt sich axial an der Toleranzausgleichsscheibe 32 und an einem Sicherungselement 34, weiches in einer Nut des Kupplungsgehäuses 10 axial befestigt ist, ab. Die Verschlusswandung 12 ist in ihrem inneren Randbereich 18 mittels eines Dichtungselementes 68, welches die Doppelkupplungseinrichtung 1 nach außen hin absichtet, auf dem Ankoppelelement 16 versehen. Die Verschlusswandung 12 ist in axialer Richtung elastisch ausgeführt. Damit kann eine definierte Vorspannung auf das Schrägkugellager 52 aufgebracht werden. Zusätzlich ist dadurch die axiale Sicherung gegen ein Verschieben der Doppelkupplungseinrichtung 1 in Richtung der Antriebseinheit sichergestellt. Gegen ein Verschieben in Richtung Getriebe ist die Doppelkupplungseinrichtung 1 über die Axialsicherung 44 abgestützt. Die Axialsicherung 44, welche an der Nabe 42 des Innenlamellenträgers der zweiten Kupplungseinrichtung 4 drehfest befestigt ist, stützt sich an der Stirnseite der äußeren Getriebeeingangswelle 8 axial ab. Über das Axiallager 40, die Nabe des Innenlamellenträgers 38 der ersten Kupplungsanordnung 2 und das axiale Gleitlager 36, welches zwischen der Nabe 38 und dem Ankoppelglied 16 angeordnet ist, wird die Kupplungseinrichtung in die andere Richtung axial gesichert. In radialer Richtung weist die Verschlusswandung 12 ebenfalls eine gewisse Elastizität auf. Damit werden Radialschwingungen der Antriebseinheit, welche nicht gänzlich mittels des Torsionsschwingungsdämpfers eliminiert werden können, und auf das Ankoppelglied 16 übertragen werden, gegenüber dem Kupplungsgehäuse 10 abgefedert. Weiterhin können dadurch Radialkräfte welche durch einen Achsversatz zwischen Antriebseinheit und Getriebe entstehen und bei radial starrer Lagerung zu Zwangskräften auf das Radiallager und zwischen Primär und Sekundärseite des Torsionsschwingungsdämpfers führen würden mittels der Verschlusswandung 12 abgefedert werden. Axial entgegengesetzt der ersten Lageranordnung 20 befindet sich die zweite Radiallageranordnung 24. Die Lageranordnung 24 ist als Nadellager 56 ausgebildet. Das Nadellager 56 weist einen Innenring, welcher auf einem ersten Lagersitz 26 der ÖIzufuhrnabe 62 angeordnet ist, und einen Außenring, welcher auf einem zweiten Lagersitz 28 im Kupplungsgehäuse 1 angeordnet ist, auf. Das Nadellager 56 ist als sog. Loslager ausgebildet, da sich der Innenring bezüglich der Wälzkörper des Nadellagers axial verschieben kann. Zwischen dem Nadellager und dem Teilabschnitt der Ölzufuhmabe 62, welcher mit Radial- bzw. Axialbohrungen zur Ölaufnahme ausgestattet ist, befindet sich eine Radialbohrung 48, welche dazu dient, Kühlöl in den Zwischenraum zwischen der Ölzufuhmabe 62 und der Getriebeeingangeswelle 8 von radial außen her einzuleiten. Über die Toleranzausgleichsvorrichtung 22 können axiale Toleranzen zwischen der Stirnseite der Getriebeeingangswelle bezüglich der Nut, in welche das Sicherungselement 34 eingreift, ausgeglichen werden. Damit kann sichergestellt werden, dass im wesentlichen immer die gleiche axiale Vorspannung bei verschiedenen Toleranzlagen auf das Schrägkugellager 52 aufgebracht wird.

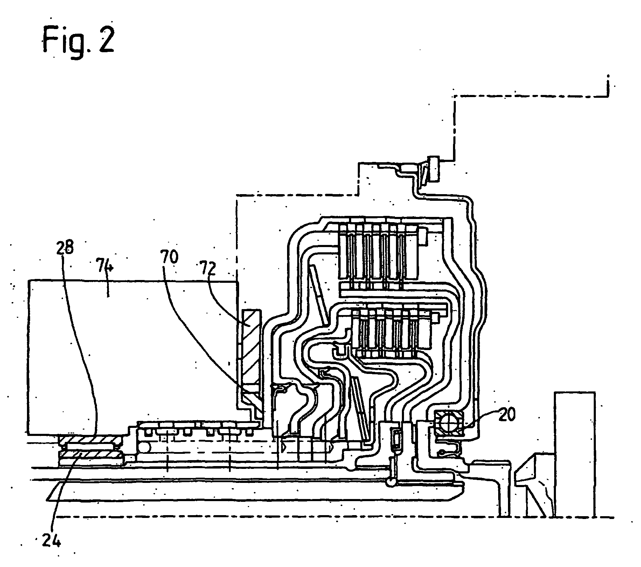

Fig. 2 zeigt prinzipiell den gleichen Aufbau der Doppelkupplungseinrichtung aus Fig. 1, jedoch ist die erste Radiallageranordnung 20 als Rillenkugellager ausgebildet. Weiterhin ist der zweite Lagersitz 28 der zweiten Lageranordnung 24 im schematisch dargestellten Gehäuse einer mit dem Kupplungsgehäuse 10, bzw. Getriebegehäuse fest verbundenen Hydraulikeinheit 74 angeordnet, welche über ein Antriebselement 70, welches am Außenlamellenträger 58 drehfest angeordnet ist und einem mit diesem im Wirkkontakt stehenden Antriebselement 72 der Hydraulikeinheit 74, angetrieben wird. Die Hydraulikelnheit 74, welche vorzugsweise eine Hydraulikpumpe aufweist, versorgt über die Ölzufühmabe 62 die Kupplungseinrichtung mit Drucköl zur Druckbeaufschlagung der Kupplungsanordnungen 2, 4 und mit Kühlöl zur Kühlung der Lamellenpakete. Weiterhin kann die Hydraulikeinheit derart ausgestaltet sein, dass sie zusätzlich Schmieröl zur Schmierung von Zahnrädern oder anderen Getriebebauteilen oder/und Drucköl zum Schalten von Synchroneinheiten des Getriebes fördern kann.

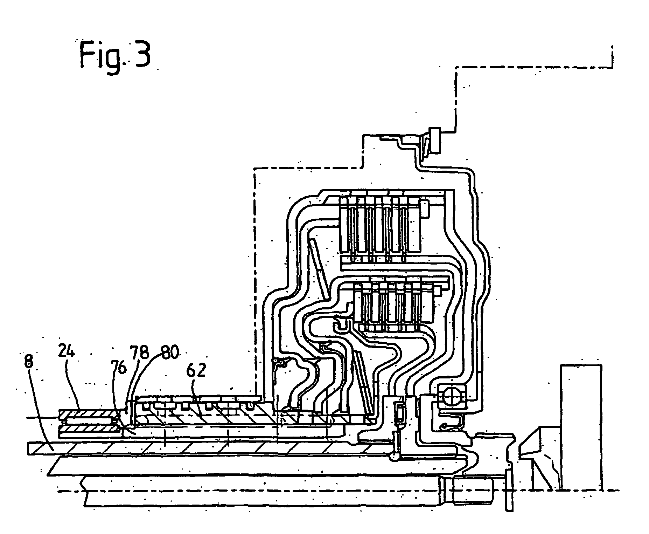

Fig. 3 zeigt eine erfindungsgemäße Kupplungseinrichtung gemäß Fig. 2 mit einer alternativ ausgestalteten Ölzufuhmabe 62, welcherbezüglich der Kühfölführung optimiert ausgestaltet ist. Dazu ist die Ölzufuhmabe 62 an ihrem Innenumfang mit mindestens einer Axialnut 76 ausgestaltet, sodass die Fläche in Fließrichtung welche von Kühlöl senkrecht durchströmt wird vergrößert ist. Das Kühlöl fließt sowohl im Zwischenraum zwischen Ölzufuhmabe 62 und äußerer Getriebeeingangswelle 8 in Richtung Kupplungsinneres, als auch in den Axialnuten 76. Die radiale Tiefe der Nut ist so bemessen, dass sie größer als die minimale Stärke der Nabenwandung der Ölzufühmabe 62 in einem Zwischenbereich 78 zwischen der zweiten Lageranordnung 24 und dem Ölkanäle aufweisenden Teil der Ölzufuhmabe 62 ist. Die axiale Erstreckung der Axialnut 76 reicht in Richtung Getriebe bis in den Zwischenbereich 78, sodass hier ein radialer Durchgang zur Einleitung des Kühlöls von radial außerhalb der Ölzufühmabe nach radial innen entsteht. Mit Bezugszeichen 80 ist die Außenlinle des Verfahrweges eines Fräswerkzeugs bezeichnet , welches die Axialnut 76 und im Zwischenbereich 78 den radialen Durchgang erzeugt.

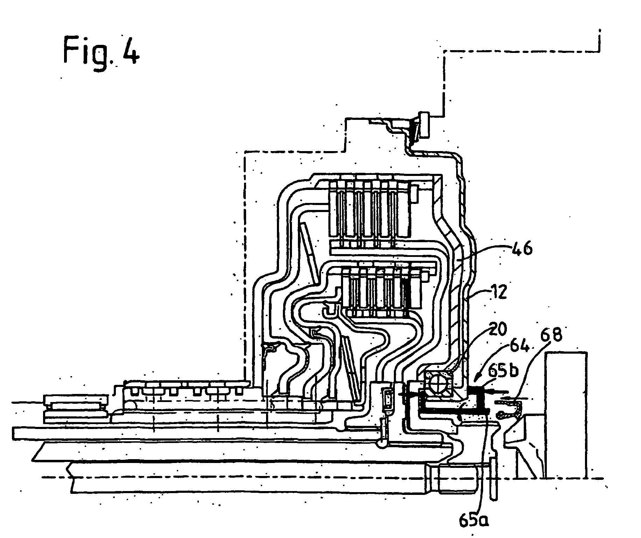

In Fig.4 ist der Montagevorgang der ersten Lageranordnung 20 der Kupplungseinrichtung aus Fig.3 mit einer symbolhaft dargestellten Montagehilfe 64 dargestellt. Die Montagehilfe 64 besteht im wesentlichen aus 2 Teilen, welche relativ zueinander axial verschiebbar sind. Damit kann mit dem ersten Tell 65a der Innenring des bereits in den Mitnehmer 46 eingepressten Rillenkugellagers in Richtung Antriebseinheit gegengehalten werden, während mit dem zweiten Teil 65b der Montagehilfe 64 die Verschlusswandung 12 in den innenring geschoben wird.

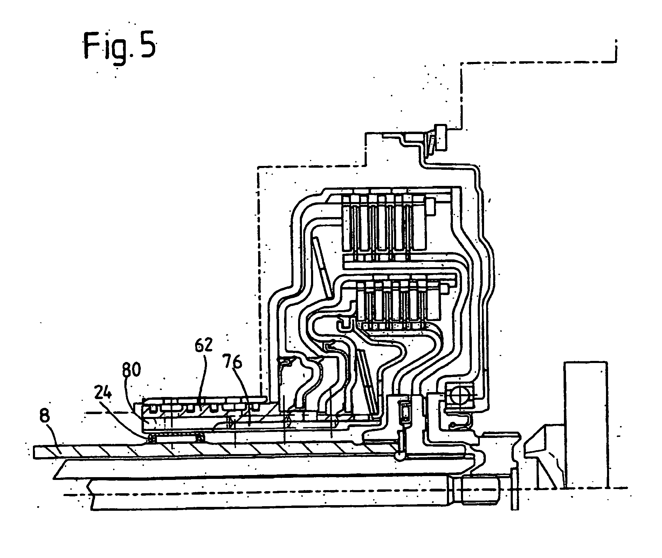

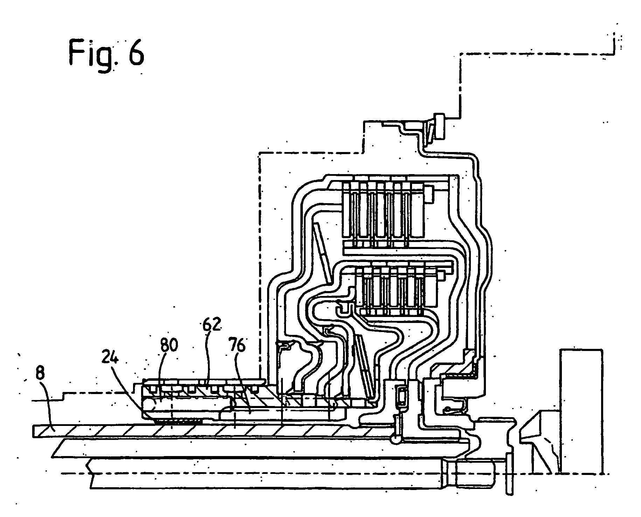

In Fig. 5 und Fig. 6 ist eine Kupplungseinrichtung dargestellt in welcher die zweite Lageranordnung 24 auf der äußeren Getriebeeingangswelle 6 angeordnet ist, was die Gesamtaxiallänge der Kupplungseinrichtung verkürzt. Die Ölzufuhmabe 62 ist für die Kühlölführung mit axialen Bohrungen 80 ausgestattet, welche in korrespondierenden Axialnuten 76 enden. Die Figuren 5 und 6 zeigen keine Ausführungsbeispiele der Erfindung.

In Fig. 5 ist die zweite Lageranordnung 24 als Nadellager ausgebildet, wobei die Nadeln direkt auf der Getriebewelle laufen. In Fig. 6 sind die erste Lageranordnung 20 und die zweite Lageranordnung 24 als Gleitlager ausgebildet, wobei die erste Radiallageranordnung 20 als Bundbuchse ausgebildet ist, welche in den Mitnehmer 46 eingepresst ist. Damit ist sowohl eine sich in axialer Richtung erstreckende Gleitfläche, welche als Radiallagerung dient und eine sich radial erstreckende Gleitfläche realisiert, welche als Axialsicherung in Richtung Antriebseinheit dient.

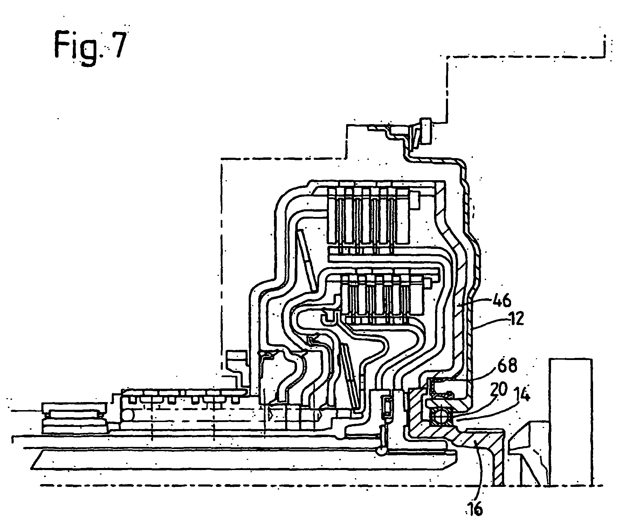

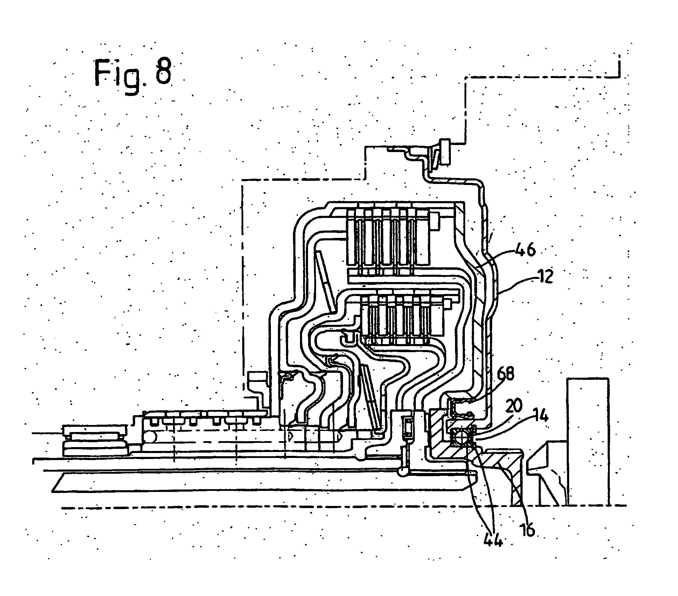

In Fig. 7 und Fig. 8 ist eine erfindungsgemäße Kupplungseinrichtung gemäß Fig.1 dargestellt, wobei die erste Radiallageranordnung 20 alternativ ausgestaltet ist. Die erste Radiallagerung ist hierbei als Rillenkugellager ausgebildet, welches mit seinem innenring auf dem Ankoppelglied 16 und mit seinem Außenring in einem Innenumfang der zentralen Öffnung 14 der Verschlusswandung 12 angeordnet ist. Das Dichtungselement 68 ist radial außerhalb der Radiallegeranordnung 20 zwischen dem Mitnehmer 46 und der Verschlusswandung 12 angeordnet. Somit ist der Umfang des Rillenkugellagers minimiert, wodurch bei einer gewissen Drehgeschwindigkeit die Relativgeschwindigkeit der Wälzkörper kleiner ist als bei einem Kugellager größeren Umfangs, welches dadurch stärker belastet wird. Durch die Anordnung des Dichtungselementes 68 radial außerhalb der ersten Radiallageranordnung 20 befindet sich diese außerhalb des Nassraumes der Kupplungseinrichtung und wird dadurch nicht mehr ölgeschmiert. Erfindungsgemäß werden bei dieser Anordnung des Dichtungselementes 68 abgedichtete fettgeschmierte Lager verwendet. Vorteilhaft hierbei ist, dass dadurch die Lebensdauer der Lager unabhängig des Verschmutzungsgrades des Kühlöls ist. in Fig. 7 sind der Innen- und der Außenring der Radiallageranordnung 20 jeweils auf ihren Lagersitz gepresst, wobei der Innenring an einem radialen Anschlag des Ankoppelgliedes 16 anliegt und der Außenring an einem dem Anschlag des Innenrings axial entgegengesetzten radialen Anschlag der Verschlusswandung 12 anliegt. In Fig. 8 liegen der Innenund der Außenring der Radiallageranordnung 20 an getriebeseitigen Anschlägen des Ankoppelgliedes 16 und der Verschlusswandung 12 an. In Richtung Antriebseinheit sind der Innen- und der Außenring mittels Axialsicherungen 44, welche als Sicherungsringe, die in Radialnuten des Ankoppelgliedes 16 und der Verschlusswandung 12 sitzen, axial gegen ein Verschieben gesichert.

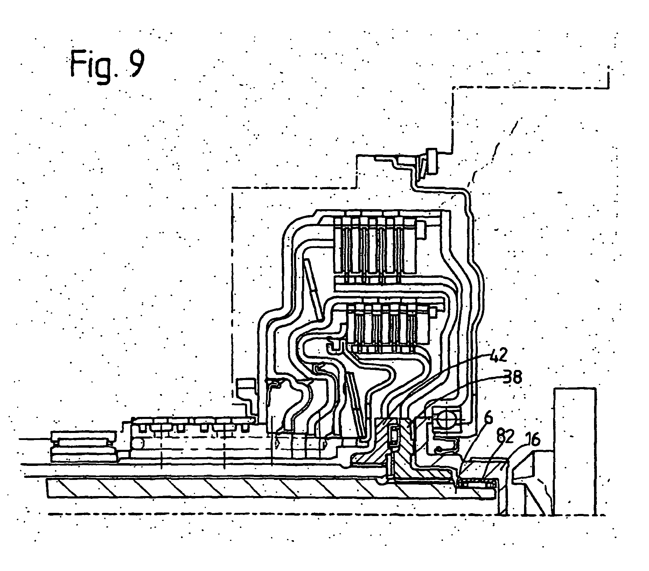

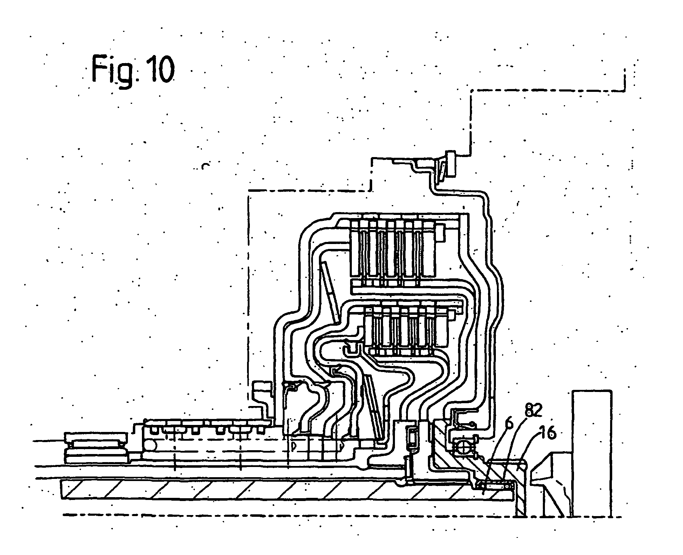

In Fig. 9 und Fig. 10 ist in einer Innenumfangsfläche des Ankoppelgliedes 16 ein Pilotlager zur Lagerung der ersten Getriebeeingangswelle 6 angeordnet. Dazu ist die innere Getriebeeingangswelle 6 an ihrem axialen Ende mit einem kolbenartigen Endstück versehen , welches als Lagersitz zur Aufnahme des Pilotlagers 82 dient. Damit ist das freie Ende der Getriebewelle innerhalb der Kupplungseinrichtung gelagert und Radialschwingungen der Getriebewelle, welche besonders bei relativ langen Wellen mit großer freier Kraglänge, also großem Abstand der Verzahnungsbereiche der Getriebewellen, welche die Naben der Innenlamellenträger 38, 42 der beiden Kupplungsanordnungen 2, 4 aufnehmen, zur getriebeseitigen Radiallagerung, auftreten, werden verhindert.

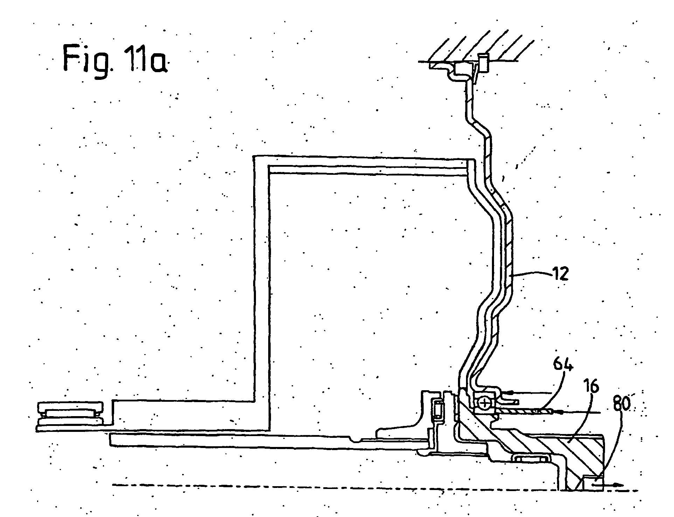

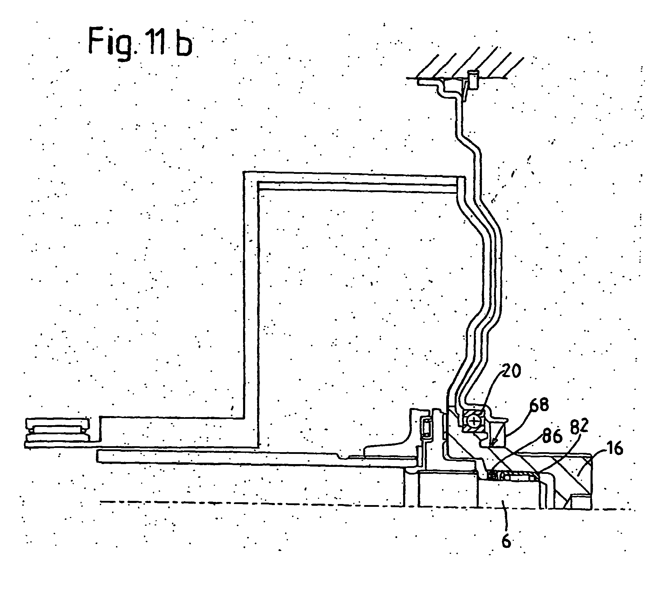

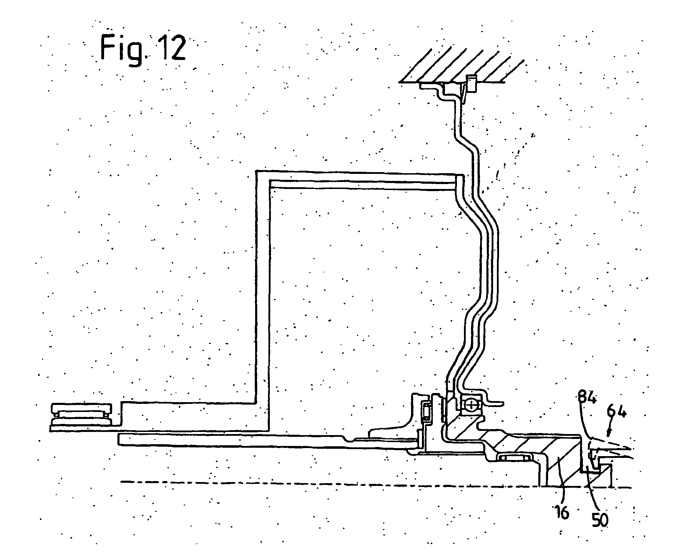

Die Figuren 11a, 11 b und 12 zeigen schematisch die Wirkungsweise einer erfindungsgemäßen Montagehilfe 64. In Figur 11a drückt die Montagehilfe 64 axial in Richtung Getriebe auf den Innenring des bereits fest in die Verschlusswandung 12 eingepressten Kugellagers und gleichzeitig auf den Randbereich der Verschlusswandung 12, in welcher das Lager eingepresst ist. Gleichzeitig wird mittels eines schraubenartig ausgestalteten Gegenhaltestückes der Montagehilfe 64, welches in eine mit einem Gewinde versehenen Axialbohrung 80 des Ankoppelgliedes 16 eingeschraubt ist, der Lagersitz des einzupressenden Lagers der Kupplungseinrichtung in Richtung Antriebseinheit gegengehalten. Fig. 11b zeigt die bereits eingepresste erste Radiallageranordnung 20 und das nach Entfernen der Montagehilfe 64 eingesetzte Dichtungselement 68. Weiterhin ist zur Abdichtung des Pilotlagers 82, welches als Nadellager ausgebildet ist, ein Dichtungselement 86 zwischen erster Getriebewelle 6 und Ankoppelglied 16 eingebaut. Damit ist ein geschlossener abgedichtester Lagerraum innerhalb des Ankoppelgliedes 16 geschaffen, welcher zur Schmierung des Pilotlagers 82 mit Fett gefüllt werden kann. Der Vorteil gegenüber einer Ölschmierung hierbei ist, dass durch das Dichtungselement 86 das Schmiermedium aufgrund der Fliehkraft nicht nach radial außen ins Kupplungsinnere entweichen kann und die Gefahr einer Unterversorgung des Pilotlagers mit Schmiermedium vermieden ist. In Fig. 12 ist eine alternative Ausgestaltung des Ankoppelelementes 16 und der Montagehilfe 64 zum Gegenhalten der Kupplungseinrichtung dargestellt. Hierzu ist das Ankoppelglied 16 an seinem axialen, der Antriebseinheit zugewanden Ende mit einer Radialnut 50 ausgestaltet, in welche Hakenelemente 82 der Montagehilfe 64 radial eingreifen können um mittels der Wirkkontakt stehenden Radialflanken der Radialnut 50 und der Hakenelemente 84 die Kupplungseinrichtung in Richtung Antriebseinheit gegenzuhalten.

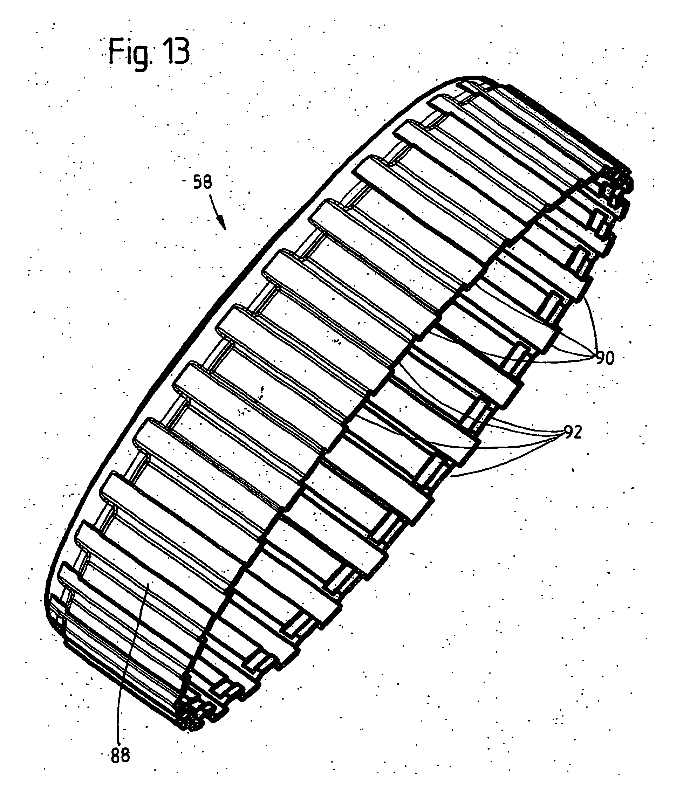

In Fig.13 ist ein erfindungsgemäßer Außenlamellenträger 58 der ersten Kupplungsanordnung 2 aus Fig. 1 im Detail abgebildet. Erfindungsgemäß ist der Mitnehmer 46 der Kupplungseinrichtung mit dem Außenlamellenträger 58 an dessen axialen Außenbereich, welcher ein die Außenlamellen aufnehmendes Verzahnungsprofil 88 aufweist axial angeflanscht und angeschweißt. Erfindungsgemäß wird der Mitnehmer 46 und der Lamellenträger 58 mittels Laser Schweißen miteinander verschweißt. Diese drehfeste und spielfreie Verbindung ist Vorraussetzung des erfindungsgemäßen Lagerkonzeptes, da damit ein Verkippen der beiden radiallagertragenden Kupplungsbauteile verhindert wird. Vorteilhaft beim Laserschweißen ist, wenn der aktuell zu verschweißende Bereich abstandsstabil zum Brennpunkt des Lasers bleibt. Bei veränderlichem Abstand zum Laser kommt es sonst zu sogenannten Schweißspritzern, welche zu Beeinträchtigungen der Funktionalität der Kupplungseinrichtung führen können, wenn sie in Kupplungsinnere gelangen. Zum Verschweißen wird der Lamellenträger 58 axial auf den Randbereich des Mitnehmers 46 gedrückt und die Kupplungseinrichtung unter dem Brennpunkt des Lasers um ihre axiale Drehachse gedreht. Der Brennpunkt des Laser ist dazu axial genau auf die Kontaktstelle des Mitnehmers 46 und des Lamellenträgers 58 ausgerichtet. Radial ist der Brennpunkt auf den Außenumfang des Lamellenträgers 58, welcher durch die Zahnköpfe 90 gebildet wird, ausgerichtet. Damit der Brennpunkt des Lasers beim Drehen der Kupplungseinrichtung immer den gleichen Abstand zum zu verschweißenden Material hat, ist der Mitnehmer erfindungsgemäß an seinem Außenumfang geschränkt ausgebildet. Damit der Außenlamellenträger 58 axial spielfrei am Mitnehmer anliegt, sind die zwischen den Zahnköpfen 90 liegenden Verzahnungsbereiche 92 axial zurückgesetzt ausgebildet. Dies kann zum Beispiel durch Ausstanzen oder Ausfräsen der entsprechenden Bereiche realisiert werden.

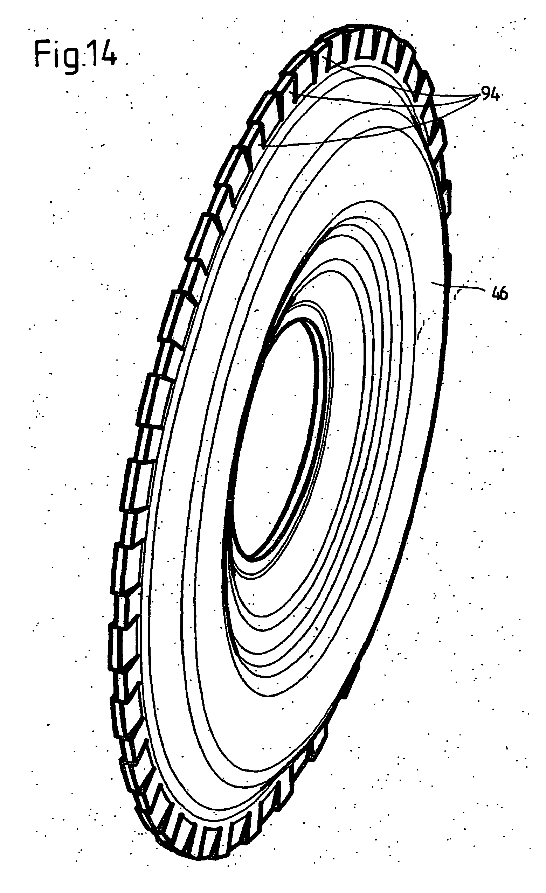

In Fig. 14 ist ein erfindungsgemäßer Mitnehmer 46 dargestellt. Am Außenumfang des Mitnehmers 46 sind die einzelnen axial versetzt angeordneten radialen Stege 94 angeordnet welche in die korrespondierenden Aussparungen am Lamellenträger 58 eingreifen können. Die einzelnen Stegkanten können alle auf den Achsmittelpunkt des Mitnehmers 46 zulaufen oder aber jeweils parallel zu einer der Teilung folgenden Symmetrie-Mittellinie ausgebildet sein.

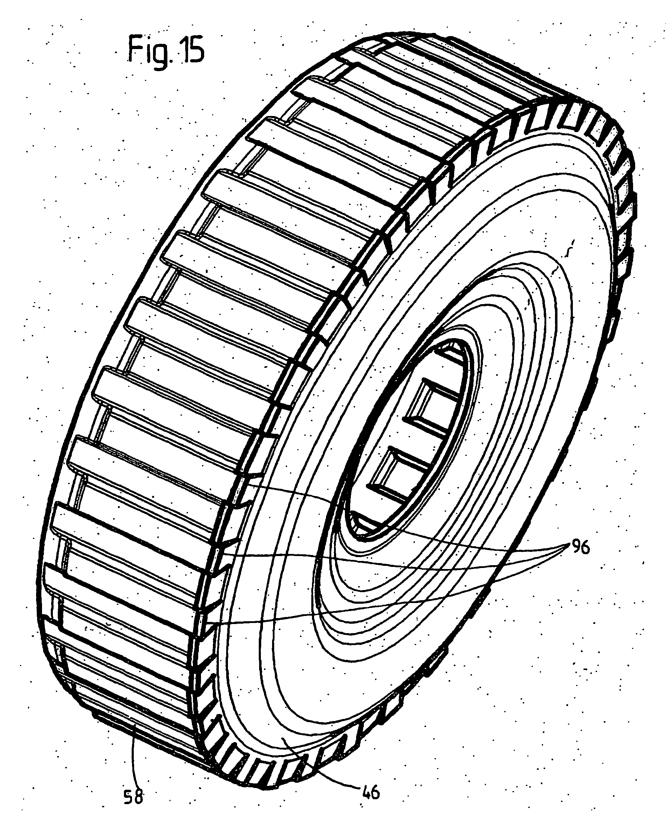

In Fig. 15 ist der Außenlamellenträger 58 im Zusammenbau mit dem Mitnehmer 46 dargestellt. Die axial verbogenen Randbereiche des Mitnehmers sind axial relativ zueinander axial überlappend angeordnet. Damit ist der Brennpunkt des Lasers, welcher beim Schweißen genau auf die Berührkante 96 des Außenumfangs des Lamellenträgers 58 und des Mitnehmers 46 fokussiert ist, beim Drehen der Kupplungseinrichtung abwechselnd auf die radial äußere Berührkante des Lamellenträgers und im Zahnzwischenbereich auf die axiale Mitte der in die Aussparung eingreifenden zurückgebogenen Stege 94 ausgerichtet, womit der Laser im Anschweißbereich eine Verbindung von Lamellenträger 58 und Mitnehmer 46 schafft und im Zwischenbereich spritzerfrei im Material des Mitnehmers 46 läuft. Zusätzlich ist eine ununterbrochene Schweißlinie realisiert, welche die versetzt zueinander angeordneten Stege im radialen Übergangsbereich wieder miteinander verschweißt.

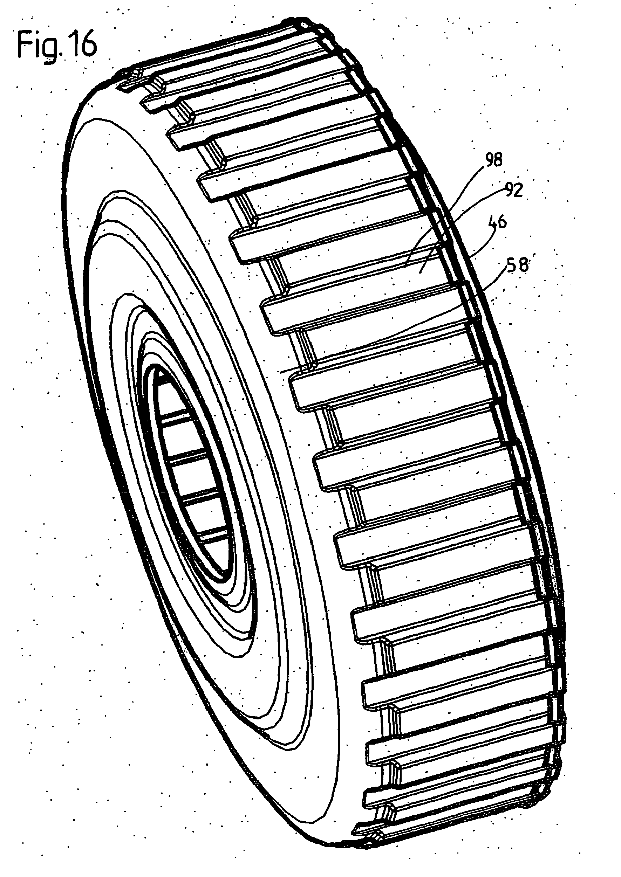

In Fig. 16 ist eine alternative Ausgestaltung des Außenlamellenträgers 58 und des Mitnehmers 46 im Zusammenbau dargestellt. Hierbei sind die Stege des Mitnehmers 46 welche axial in die Zahnzwischenbereiche 92 eingreifen, nach radial innen dermaßen verjüngt ausgebildet, dass sie beim Umbiegen bündig auf den Zahnflanken 98 des Lamellenträgers 58 anliegen. Vorteilhaft hierbei ist, dass die momentführenden Stege sich nach radial innen verbreitern und die Zahnzwischenbereiche 92 des Lamellenträgers 58 nicht axial ausgeklinkt werden müssen. Weiterhin sei noch angemerkt, dass weitere Ausgestaltungen des Mitnehmers 46 insofern möglich sind, dass die Stege in den Zahnzwischenbereichen axial weggebogen werden können und Ringe bzw. Ringsegmente als Spritzerschutz eingelegt werden, was ebenso das Ausklinken am Außenlamellenträger 58 einspart. Weiterhin können die Stege des Mitnehmers auch dermaßen axial gegenseitig verbogen werden, dass es keine radiale Überlappung mehr gibt sondern ein radialer Zwischenraum entsteht, in den ebenfalls Ringsegmente, welche halbschalenförmig ausgebildet sein können, eingelegt werden können und die als Spritzerschutz dienen.

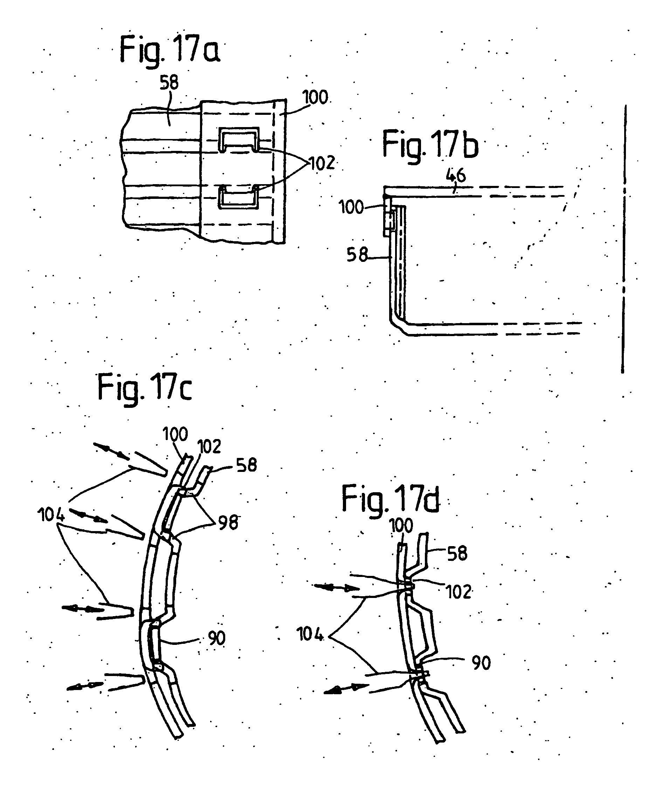

In den Fig. 17a, 17b, 17c, 17d ist eine alternative Ausgestaltung des Lamellenträgers 58 dargestellt. Fig.17a zeigt einen Teilausschnitt einer radialen Draufsicht auf den Lamellenträger 58. Hierbei ist am Außenumfang des Lamellenträgers 58 ein Ringteil 100 angebracht. Das Ringteil 100 weist nach radial innen weggebogene Teilbereiche 102 auf, welche an den Zahnflanken 98 des Lamellenträgers 58 formschlüssig anliegen oder diesen durchsetzen. In Fig. 17b ist das Ringteil 100 im Zusammenbau mit dem Lamellenträger 58 und dem Mitnehmer 46 dargestellt. Hierbei ist der Mitnehmer 46 radial außen am Ringteil 100 angeschweißt, welches selbst formschlüssig mit dem Lamellenträger 58 verbunden ist. Damit hat bei einer zylinderförmigen Ausgestaltung des Ringteils 100 der zu verschweißende Randbereich des Mitnehmers 46 und des Ringteils 100 einen radial gleichbleibenden Abstand zur Drehachse. In Fig. 17c und Fig. 17d sind verschiedene Anbindungsmöglichkeiten des Ringteils 100 am Lamellenträger 58 aufgezeigt wobei die Montagewerkzeuge 104 zur formschlüssigen Montage des Ringteils 100 auf den Lamellenträger 58 schematisch dargestellt sind. Dazu sind in Fig. 17c die Zahnflanken 98 des Lamellenträgers 58 mit Ausstanzungen versehen, in welche Teilbereiche 102 des Ringteils 100 mittels der Montagewerkzeuge 104 nach radial innen gedrückt werden und somit die Zahnköpfen 90 formschlüssig umschließen. In Fig. 17d sind Die Zahnköpfe 90 mit Ausstanzungen oder Radialbohrungen versehen, in welche mittels dornförmig ausgestalteter Montagewerkzeuge 104 Teilbereiche 102 des Ringteils 100 nach radial innen formschlüssig mit dem Lamellenträger gedrückt werden.

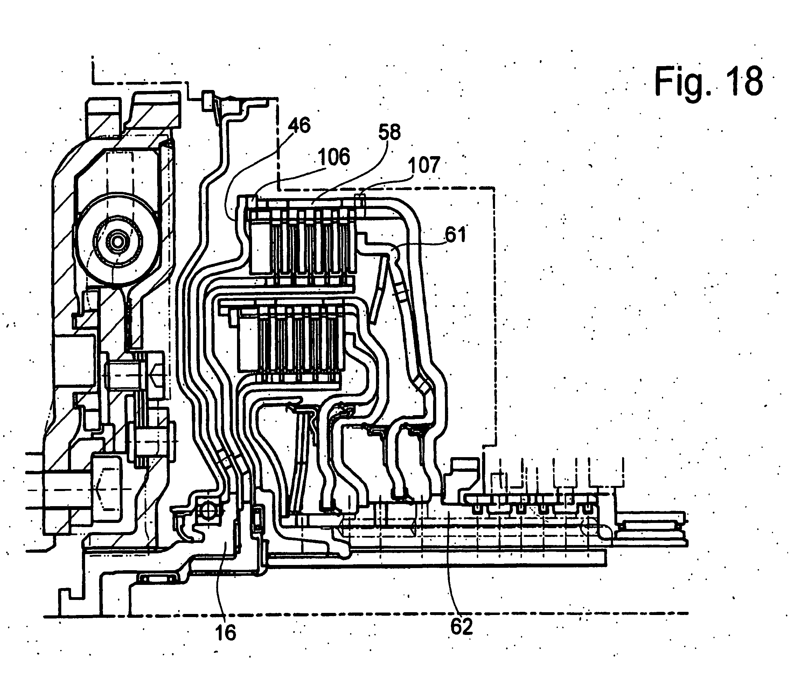

In Fig. 18 ist eine weitere Ausgestaltung der Doppelkupplungseinrichtung gemäß Fig. 3 dargestellt, mit einer alternativen Ausgestaltung der Ankopplung des Mitnehmers 46 am Außenlamellenträger 58. Hierbei ist der Außenlamellenträger 58 nicht direkt mit dem Mitnehmer 46 verschweißt, sondern unter Zwischenschaltung des Ringelementes 106. Das Ringelement 106 ist als gesondertes Bauteil ausgestaltet, welches mit dem Außenlamellenträger 58 vor Zusammenbau der Doppelkupplungseinrichtung verschweißt wird. Die Problematik von Schweißspritzern, welche beim Schweißen mittels des bevorzugten Laserschweißverfahrens auftreten, wenn der Abstand des zu verschweißenden Materials zum Schweißkopf während des Schweißvorganges nicht konstant gehalten werden kann, führt bei diesem Montagevorgang nicht zu den bereits angesprochenen Nachteilen und der Gefahr von Funktionsbeeinträchtigung der Doppelkupplungseinrichtung, da das Ringelement 106 und der Außenlamellenträger 58 vor dem eigentlichen Zusammenbau der Doppelkupplungseinrichtung, dem Einlegen der Lamellenpakete und der Kolben der beiden Kupplungsanordnungen, als gesonderte Bauteile zusammengeschweißt werden können. Eventuelle Verschmutzungen und Schweißspritzer können nach Beendigung des Verschweißens problemlos aus dem topfförmigen, noch hohlen, Außenlamellenträger entfernt werden. Das Ringelement 106 hat erfindungsgemäß eine glatte zylinderförmige Oberfläche mit konstantem Außendurchmesser. Damit wird beim Verschweißen des Mitnehmers 46 am Ringelement 106, was nach erfolgtem Zusammenbau der Doppelkupplungseinrichtung als letzter Herstellungsschritt vor der räumlich und zeitlich getrennten Montage der Doppelkupplungseinrichtung ins Getriebe erfolgt, die Gefahr des Auftretens von Schweißspritzern, welche ins Innere der Kupplungseinrichtung gelangen können, minimiert, da der Abstand zwischen dem zu verschweißenden Material und der Laserschweißeinrichtung bei Drehung derselben um ihre Achse konstant gehalten wird. Erfindungsgemäß kann das Ringelement 106 bei der Herstellung des Betätigungskolbens 61 mit angefertigt werden. Der Betätigungskolben 61, welcher als Blechumformteil hergestellt wird, wird hierbei nach dem Erstellen seines Profiles an seinem radialen Außenumfang auf seinen definierten Außendurchmesser ausgestanzt. Das Ringelement 106 kann hierbei erfindungsgemäß beim Stanzen des Betätigungskolbens 61 auf seinen Außendurchmessers hergestellt werden. Hierzu hat der Betätigungskolben 61 erfindungsgemäß vor dem Ausstanzen einen Durchmesser, welcher größer ist als der Außendurchmesser des Ringelementes 106. Damit kann aus einem Blechteil sowohl der Betätigungskolben 61 als auch das Ringelement 106 h gestanzt werden. Die Position des Ringelementes 106 bezüglich des Betätigungskolbens 61 vor dessen Ausstanzung, ist in Fig. 18 mit Bezugszeichen 107 angegeben. Der Vorteil bei dieser Art der Herstellung ist, dass das Material optimal ausgenutzt wird, da bei einer separaten Herstellung des Ringelementes 106 durch Ausstanzen aus einer vollflächigen Matrix, die komplette scheibenförmige Innenfläche, welche beim Ausstanzen anfällt, ungenutzter Stanzabfall ist.

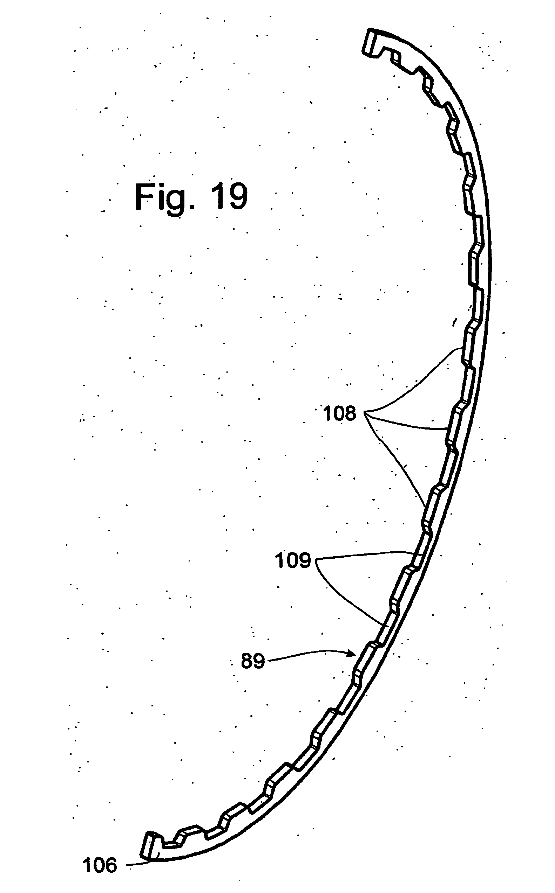

In Fig. 19 ist ein Teilausschnitt des Ringelementes 106 dargestellt. Deutlich zu erkennen ist das am Innenumfangsbereich angeordnete Verzahnungsprofil 89, welches aus den Zähnen 108 und den dazwischen liegenden Zahnböden 109 besteht. Der Außenumfang des Ringelementes 106 ist, wie ersichtlich, kreisrund ausgestaltet.

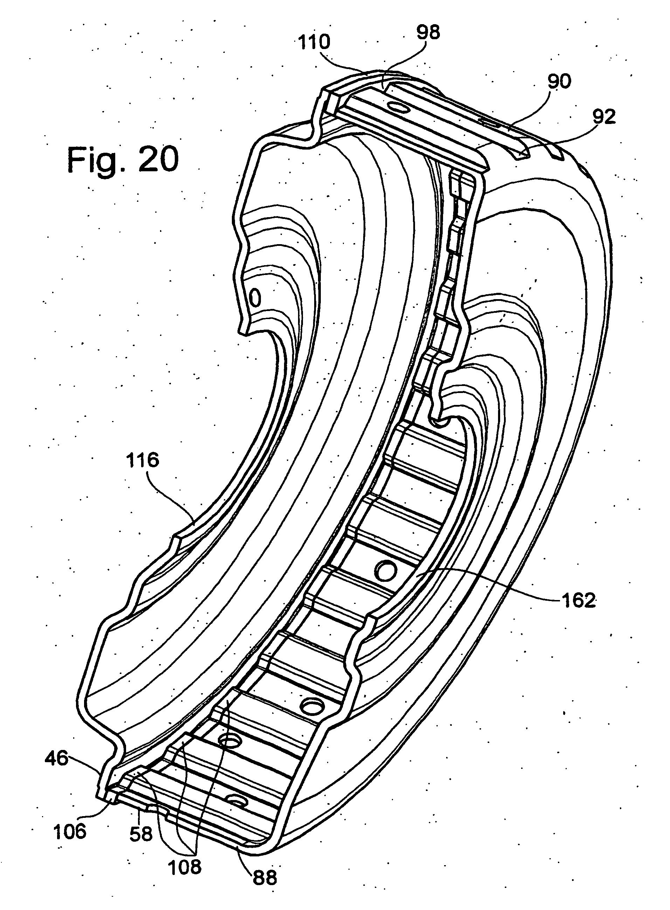

In Fig. 20 ist ein Ausschnitt des Zusammenbaus von Außenlamellenträger 58, Ringelement 106 und Mitnehmer 46 dargestellt. Die Lamellenpakete der Kupplungsanordnungen sowie die zugehörigen Betätigungskolben sind der Übersichtlichkeit halber weggelassen. Deutlich zu erkennen ist, dass das Verzahnungsprofil 89 des Ringelementes 106 mit dem Verzahnungsprofil 88 des Außenlamellenträgers 58 identisch ist; und das Ringelement 106 bezüglich des Außenlamellenträgers 58 dermaßen zugeordnet ist, dass sich die Zähne 108 des Ringelementes 106 mit den zugehörigen Zähnen des Außenlamellenträgers 58 decken. Weiterhin ist deutlich zu sehen, dass der Außenumfang des Ringelementes 106 und der Außenumfang des Mitnehmers 46 gleichen Radius aufweisen, sodass idealerweise zwischen dem Mitnehmer 46 und dem Ringelement 106 am Außenumfang kein Versatz auftritt. Die beiden Teile werden beim Zusammenschweiße plan aneinander gedrückt, sodass der Laser beim Verschweißen auf die Berührkante 110 zwischen dem Mitnehmer 46 und dem Ringelement 106 fokussiert werden kann, welche beim Verschweißen der beiden Teile einen konstanten Abstand zum Schweißkopf aufgrund ihrer geometrischen Ausgestaltung beibehält. Vor dem Verschweißen des Mitnehmer 46 mit dem Außenlamellenträger 58 müssen diese relativ zueinander radial ausgerichtet werden, was den Vorteil hat, dass bei diesem Zentriervorgang das kupplungseingangsseitigen Ankoppelglied und die Ölzuführnabe bezüglich ihrer Drehachsen relativ zueinander exakt ausgerichtet werden können, wobei Achsversätze zwischen dem Ankoppelglied 16 und dem Mitnehmer 46, sowie zwischen der Ölzuführnabe 62 und dem Außenlamellenträger 58, welche durch Bauteiltoleranzen beim Verschweißen des Ankoppelgliedes 16 am Innenumfang 116 des Mitnehmers 46, sowie beim Verschweißen der Ölzuführnabe 62 am Innenumfang 162 des Außenlamellenträgers 58 auftreten, ausgeglichen werden können, was bei einer radialen Ausrichtung des Mitnehmers 46 bezüglich des Außenlamellenträgers 58 relativ zueinander mittels einer Ausrichtung des Außenumfang des Mitnehmers 46 zum Ringelement 106 bzw. zum Außenlamellenträgers 58 nicht möglich ist.

Die Verschweißung des Ringelementes 106 mit dem Außenlamellenträger 58 erfolgt, wie schon erwähnt, vorher in einem separaten Schweißvorgang, wobei die beiden Teile ebenfalls von radial außen miteinander verschweißt werden können. Hierbei wird der Schweißkopf so eingestellt, dass der Brennpunkt der Schweißeinrichtung auf dem radialen Außendurchmesser der Zahnzwischenbereiche 92 des Außenlamellenträgers 58 fokussiert ist. Damit werden die Berührkanten der Zahnzwischenräume 92 mit dem Ringelement 106 verschweißt. In einem weiteren Schweißvorgang kann der Schweißkopf so eingerichtet werden, dass der Brennpunkt auf dem Außendurchmesser der Zahnköpfe 90 fokussiert ist. Damit werden die Berührkanten der Zahnköpfe 90 ebenfalls mit dem Ringelement 106 verschweißt, sodass lediglich die Zahnflanken 98 nicht optimal mit dem Ringelement 106 verschweißt werden, da sich beim Rotiern der Doppelkupplungseinrichtung der Abstand zum Schweißkopf ändert und sich damit die Schweißvorrichtung defokusiert, da sich der Brennpunkt des Lasers nicht mehr mit der Berührkante deckt. Es ist natürlich auch möglich, die Zahnköpfe 90 von radial außen und die Zahnzwischenbereiche 92 von radial innen mit dem Ringelement zu verschweißen, wobei hierbei der Schweißkopf so eingestellt wird, dass der Brennpunkt der Schweißeinrichtung auf dem radialen Innendurchmesser der Zahnzwischenbereiche 92 des Außenlamellenträgers 58 fokussiert ist.

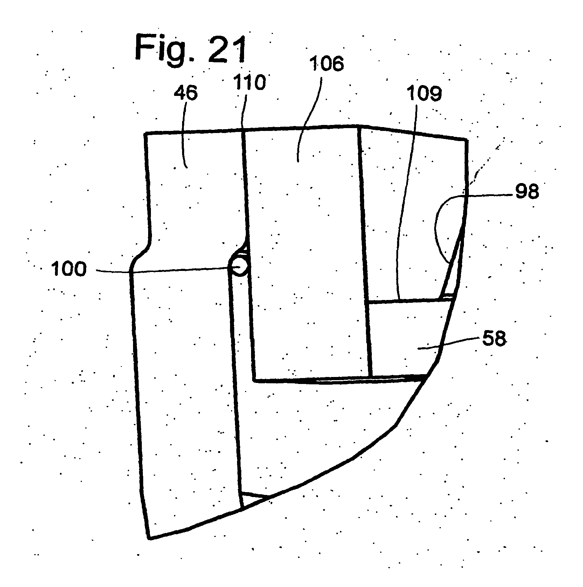

In Fig. 21 ist ein Abschnitt einer Detailansicht dargestellt, in welcher ein Schnitt des Ringelementes 106, des Mitnehmers 46 und des Außenlamellenträgers 58 zu sehen ist. Deutlich zu erkennen ist, dass bei idealer Toleranzlage der radiale Außenumfang des Mitnehmers 46 deckungsgleich mit dem radialen Außendurchmesser des Ringelementes 106 ist. Weiterhin ist ein Ringteil 100 dargestellt, welches in einem Zwischenraum zwischen dem Mitnehmer 46 und dem Ringelement 106 eingelegt ist. Dieses Ringteil 100, welches erfindungsgemäß durch einen Runddraht gebildet wird, dient dazu, dass bei einem bereichsweise nicht planen Anliegen des Mitnehmers 46 axial am Ringelement 106 beim Verschweißen derselben keine Schweißspritzer ungehindert ins Kupplungsinnere gelangen können. Liegen die beiden zu verschweißenden Teile stellenweise nicht plan aneinander und existiert ein Spalt zwischen ihnen, so können Schweißspritzer nach radial innen gelangen, wo sie aber erfindungsgemäß von einem weiteren Eindringen ins Kupplungsinnere von dem Ringteil 100 daran gehindert werden.

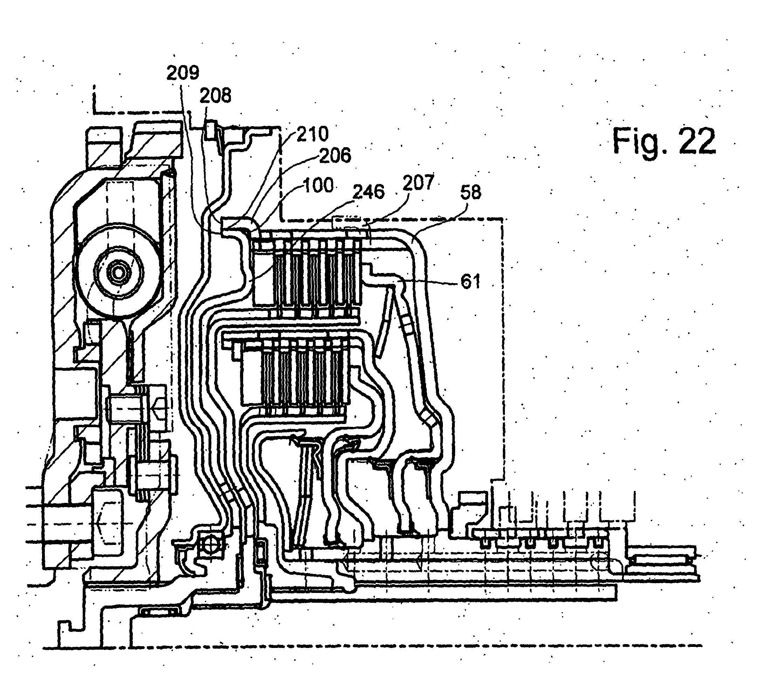

In Fig. 22 ist die Doppelkupplungseinrichtung aus Fig. 18 dargestellt, mit einer alternativen Ausgestaltung des Drehmomentmitnehmers und des Ringelementes. Das Ringelement 206 ist hierbei als ein topfförmiges Teil mit einem axialen Abschnitt ausgestaltet. Das Ringelement 206 wird erfindungsgemäß aus demselben Blechteil ausgestanzt wie der Betätigungskolben 61, was in Fig. 22 mit Bezugsziffer 207 dargestellt ist. Der Mitnehmer 246 ist an seinem radialen Außendurchmesser axial umgebogen, sodass dieser ebenfalls an seinem Außenumfang topfförmig ausgebildet ist. Hierbei sind der Außenumfang des Mitnehmers 246 und der Innenumfang des axialen Erstreckungsbereiches des Ringelementes 206 so aufeinander abgestimmt, dass der Mitnehmer 246 radial innerhalb des Ringelementes 206 angeordnet werden kann, wobei der Ringspalt zwischen dem Außenumfang des Mitnehmers und dem Innenumfang des Ringelementes möglichst klein gehalten wird. Das Ringelement 206 und der Mitnehmer 246 sind hierbei so ausgestaltet, dass nach dem Zusammenschieben der beiden Bauteile ein axialer Endabschnitt 208 des Ringelementes und ein axialer Endabschnitt 209 des Mitnehmers keinen Versatz zueinander bilden und deckungsgleich sind. In einem Zwischenraum zwischen dem Ringelement 206 und dem Mitnehmer 246 ist ebenfalls ein Ringteil 100 angeordnet, welches die Aufgabe hat, Schweißspritzer beim Verschweißen der beiden Bauteile daran zu hindern, ins Kupplungsinnere zu gelangen. Beim Verschweißen der beiden Bauteile Ringelement und Mitnehmer wird der Schweißkopf axial neben den beiden Bauteilen positioniert, sodass die Verschweißung der Berührkante 210 axial erfolgt. Vorteilhaft bei dieser Anordnung des Mitnehmers und des Ringelementes relativ zueinander ist, dass beim Zusammenfügen der beiden Bauteile der Mitnehmer relativ zum Außenlamellenträgers bezüglich ihres Außenumfangs zentriert wird. Ein separates Zentrieren der zu verschweißenden Bauteile relativ zueinander kann dadurch entfallen.

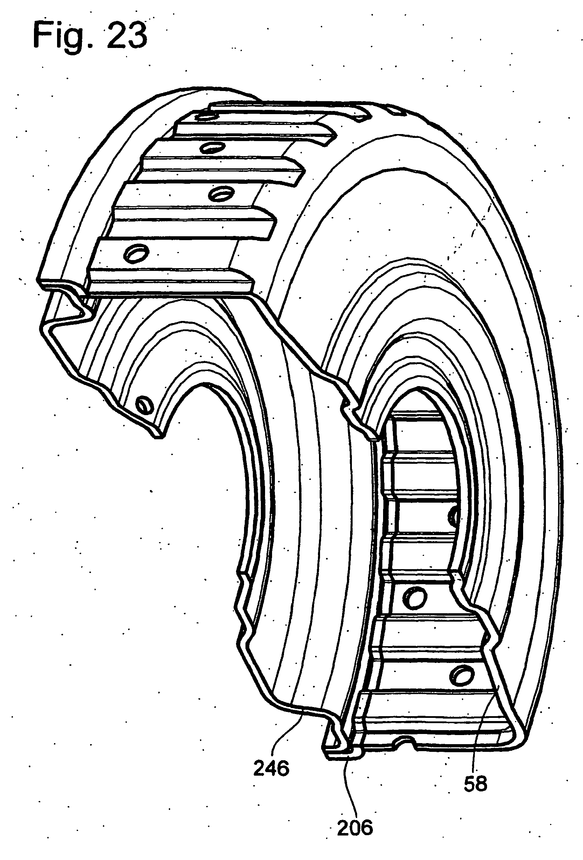

In Fig. 23 ist gemäß Fig. 20 in einem dreidimensionalen Schnittbild der Zusammenbau des Mitnehmers 246, des Ringelementes 206 und des Außenlamellenträgers 58 aus Fig.22 dargestellt. Deutlich zu sehen ist, dass das Ringelement 206 an seinem radialen Innenumfang das gleiche Verzahnungsprofil wie der Außenlamellenträger 58 trägt, und diese relativ zueinander so angeordnet sind, dass sich die Verzahnungsprofile decken. Dies ist erforderlich, da wie bereits erwähnt, die Außenlamellen erst nach dem Zusammenschweißen des Außenlamellenträgers mit dem Ringelement 206, in das Verzahnungsprofil des Außenlamellenträger geschoben werden, und dies nur bei im Wesentlichen deckungsgleichen Verzahnungsprofil möglich ist.

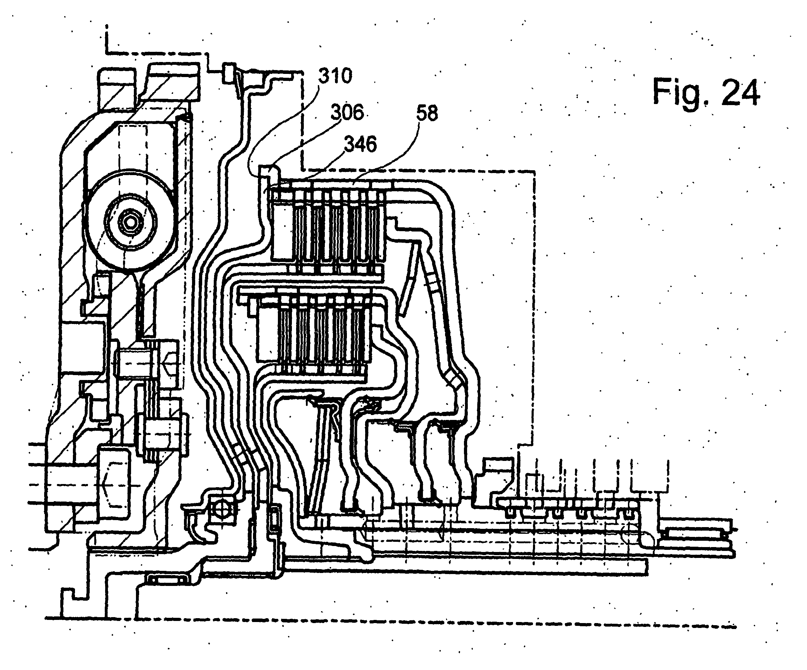

In Fig. 24 ist eine weitere Ausgestaltung der Doppelkupplungseinrichtung gemäß den Figuren 22 und 18 dargestellt. Die Verbindung des Drehmomentmitnehmers 346 mit dem Außenlamellenträger 58 erfolgt wiederum über ein zwischengeschaltetes Ringelement 306, welches mit dem Außenlamellenträger 58 am Außenumfang verschweißt ist. Der Mitnehmer 346 liegt hierbei mit seinem Außenumfang möglichst spielfrei radial an einer Innenumfangsfläche des Ringelementes 306 an. Durch zusammenfügen des Mitnehmers 346 mit der restlichen Doppelkupplungseinrichtung durch Einfügen des Mitnehmers in das Ringelement 306 wird der Mitnehmer 346 automatisch bezüglich des Außenlamellenträgers 58 zentriert. Der axiale Endabschnitt des Ringelementes 206 ist hierbei bündig im Anlagebereich 310 mit dem Mitnehmer 346. Die Herstellung einer drehfesten Verbindung zwischen dem Mitnehmer 346 und dem Ringelement 306 erfolgt vorzugsweise wiederum durch Laserschweißen oder durch MAG-Schweißen, wobei das Verschweißen bezüglich der Drehachse der Doppelkupplungseinrichtung axial erfolgt. Das Ringelement 306, welches an seinem Innenumfang einen, mit dem Verzahnungsbereich des Lamellenträgers 58 identischen Verzahnungsbereich hat, kann entweder wiederum durch Ausstanzen aus einer Platine erfolgen, oder aber aus einem Rohrabschnitt, welcher von einem dünnwandigen Rohr abgestochen wird, hergestellt werden. Der Anlagebereich des Mitnehmers 346 im Ringelement 306 wird vorzugsweise durch Drehen eines Falzes am Innenumfang des Ringelementes 306 eingearbeitet. Durch diesen Bearbeitungsschritt kann ein rechtwinkliger Falz hergestellt werden, wodurch ein Ringspalt zwischen dem Ringelement 306 und dem Mitnehmer 346 minimiert wird, sodass auf eine Anordnung eines dazwischen angeordneten Ringelementes als Spritzerschutz beim Verschweißen verzichtet werden kann.

Zur Materialsparenden Herstellung des Ringelementes 306 wird dieses erfindungsgemäß aus dem Stanzgegenstück der Endlamelle 308 hergestellt. Äußerst vorteilhaft hierbei ist, dass beim Ausstanzen des Außenverzahnungsprofiles der Endlamelle 308 das Gegenstück, aus welchem dann das Ringelement 306 hergestellt wird, bereits den Verzahnungsbereich am Innenumfang aufweist, welcher als Negativstück zur Entlamelle prinzipbedingt ein Einführen der Außenlamellen auf den Außenlamellenträger ermöglicht. Das Zusammenschweißen vom Mitnehmer 346 mit dem Ringelement 306 erfolgt von axial außen her, das Zusammenschweißen des Ringelementes 306 mit dem Außenlamellenträger von radial außen her. Durch das Einarbeiten des Falzes am Innenumfang des Ringelementes 306, welcher als Anlagebereich 310 für den Mitnehemer 346 dient, stellt das Ringelement 306 beim Verschweißen desselben mit dem Mitnehmer 346 selbst einen Spritzerschutz dar, sodass auf das Einlegen eines separaten Ringteiles verzichtet werden kann.

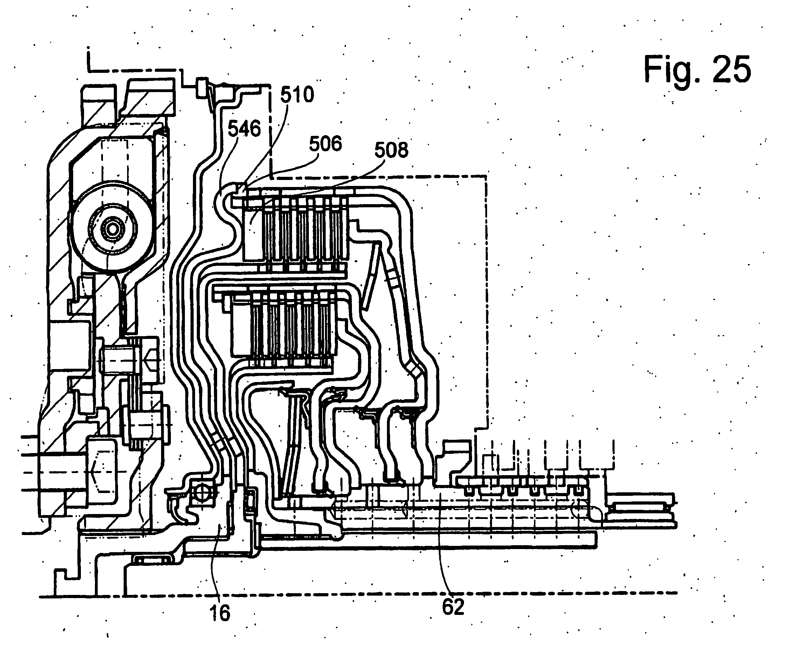

In Fig. 25 ist die Doppelkupplungseinrichtung aus Figur 24 dargestellt mit einer weitere bevorzugten Ausgestaltung des Mitnehmers und des Ringelementes. Das Ringelement 506 ist am radialen Außenumfang auf der dem Mitnehmer 546 zugewandten Seite mit einem Falz 510 ausgestaltet. In den Falz 510 greift der Mitnehmer 546 mit seiner Stirnseite axial ein, wobei hierzu der Mitnehmer 546 an seinem radialen Außenumfang axial umgebogen ist, sodass seine Stirnseite im Wesentlichen senkrecht zur Drehachse der Doppelkupplungseinrichtung ausgerichtet ist. Weiterhin ist das Ringelement 506 an seiner dem Außenlamellenträger zugewandten Seite mit einem weiteren Falz ausgestaltet, welcher den radialen Außendurchmesser des Ringelementes am Anlagebereich dem des Außenlamellenträgers angleicht. Hierdurch wird beim Verschweißen des Ringelementes 506 mit dem Außenlamellenträger der Schweißvorgang dahingehend optimiert, dass beim Verschweißen von radial außen her, die dem Außenlamellenträger zugewandte Kante des Ringelementes 506 nicht störend wirkt.
Die Herstellung des Ringelementes 506 kann hier identisch der Herstellung des Ringelementes 306 gemäß Figur 24 bei der Herstellung der Endlamelle erfolgen. Das Zusammenschweißen vom Mitnehmer 546 mit dem Ringelement 506 erfolgt bei dieser Variante der Kopplung von Mitnehmer und Außenlamellenträger ebenso wie das Zusammenschweißen des Ringelementes 506 mit dem Außenlamellenträger beidesmale von radial außen her. Durch das Einarbeiten des Falzes 510 in das Ringelement 506 stellt das Ringelement 506 beim Verschweißen desselben mit dem Mitnehmer 546 selbst einen Spritzerschutz dar, sodass auf das Einlegen eines separaten Ringteiles verzichtet werden kann.

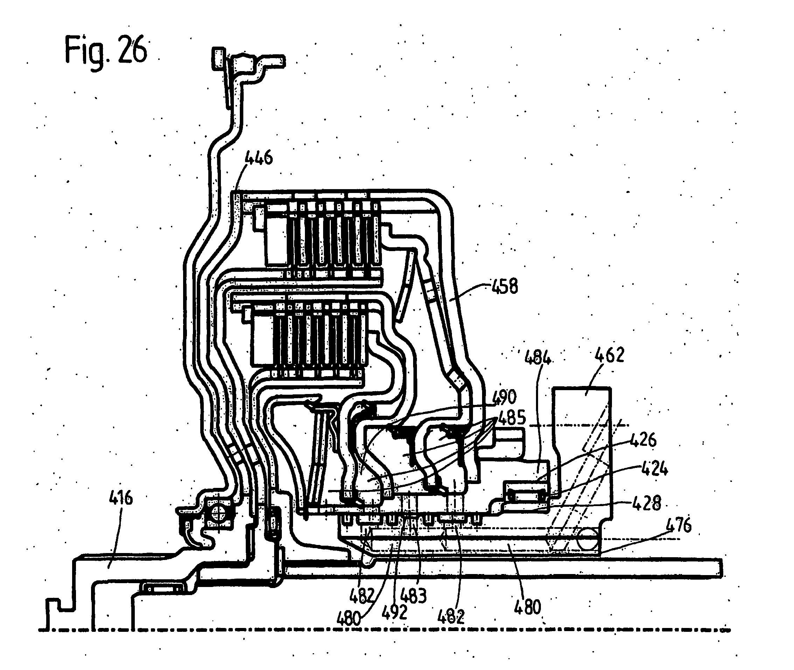

In Fig. 26 ist eine Doppelkupplungseinrichtung gemäß Fig. 3 mit einer alternativen Ausgestaltung der zweiten Lageranordnung 424 dargestellt. Die zweite Lageranordnung 424 ist hierbei als Loslager, vorzugsweise als Nadellager ausgebildet und sitzt mit seinem radial äußeren Lagerring im ersten Lagersitz 426, welcher von der Kupplungswelle 484 gebildet wird. Die Kupplungswelle 484 ist hierbei mit dem Außenlamellenträger 458 und dieser wiederum mit dem Mitnehmer 446 verschweißt. Weiterhin trägt die Kupplungswelle 484 den Außenlamellenträger der radial inneren Kupplungsanordnung sowie die beiden Betätigungskolben der Kupplungsanordnungen. Die Ölzuführnabe 462 ist in dieser Ausgestaltung der Doppelkupplungseinrichtung als stationäres, nicht drehendes Bauteil ausgebildet, welches mit dem Getriebegehäuse fest verbunden ist. Der zweite Lagersitz 428 wird von der Ölzuführnabe 462 gebildet, und dient als Lagersitz des radial inneren Lagerringes der zweiten Lageranordnung 424. Die Ölzuführnabe erstreckt sich radial innerhalb der Kupplungswelle 484 in Richtung Ankoppelglied 416 bis eine zumindest teilweise axiale Überdeckung des Kolbenraumes 490 der radial inneren Kupplungsanordnung und der Ölzuführnabe 462 gegeben ist. Vorzugsweise ist an der radialen Innenumfangsfläche der Ölzuführnabe 462 eine in axialer Richtung verlaufende Axialnut 476 angeordnet, durch welche Kühlöl zwischen der Ölzuführnabe und der radial äußeren Getriebeeingangswelle in Richtung Doppelkupplungseinrichtung gefördert wird. Zur Versorgung der beiden Kupplungsanordnungen mit Drucköl sind in der Ölzuführnabe 462 Axialbohrungen 480, welche versetzt in der Wandung der Ölzuführnabe angeordnet sind, angeordnet. Die Axialbohrungen 480 enden jeweils in Radialbohrungen 482, welche von radial außen her in die Ölzuführnabe 462 eingearbeitet sind. Weiterhin ist eine Radialbohrung 483 zur Versorgung des Fliehkraftdruck-Ausgleichsraumes der radial äußeren Kupplung mit Kühlöl, in der Ölzuführnabe 462 angeordnet, welche die Axialnut 476 mit der Ringnut 492 am Außenumfang der Ölzuführnabe 462 verbindet. Die beiden Radialbohrungen 482 enden am Außenumfang der Ölzuführnabe 462 ebenfalls in Ringnuten. Korrespondierend zu den Ringnuten der Radialbohrungen der Ölzuführnabe 462 sind in der Kupplungswelle 484 ebenfalls Radialbohrungen 485 vorgesehen, welche die Ringnuten der Ölzuführnabe mit den Kolbenräumen der beiden Kupplungsanordnungen bzw. dem Fliehkraftdruck-Ausgleichsraum der radial äußeren Kupplungsanordnung verbinden, sowie den Fliehkraftdruck-Ausgleichsraum der radial inneren Kupplungsanordnung radial innne zum Kühlölfluss hin öffnet. Zur axialen und radialen Abdichtung der Ringnuten in der Ölzuführnabe 462 gegen die Kupplungswelle 484 sind axial neben den Ringnuten jeweils Dichtungselemente aufnehmende Nuten in der Ölzuführnabe ausgebildet. Im Gegensatz zur Ausgestaltung der Doppelkupplungseinrichtung in Fig. 3, bei der der kupplungsseitige Lagersitz der ersten Lageranordnung den Außenring der ersten Lageranordnung und der kupplungsseitige Lagersitz der zweiten Lageranordnung den Innenring der zweiten Lageranordnung aufnimmt,sind in Fig. 25 die beiden Lageranordnungen dermaßen ausgestaltet, dass der kupplungsseitige Lagersitz der ersten Lageranordnung den Innenring der ersten Lageranordnung, und der kupplungsseitige Lagersitz der zweiten Lageranordnung den Außenring der zweiten Lageranordnung aufnimmt.

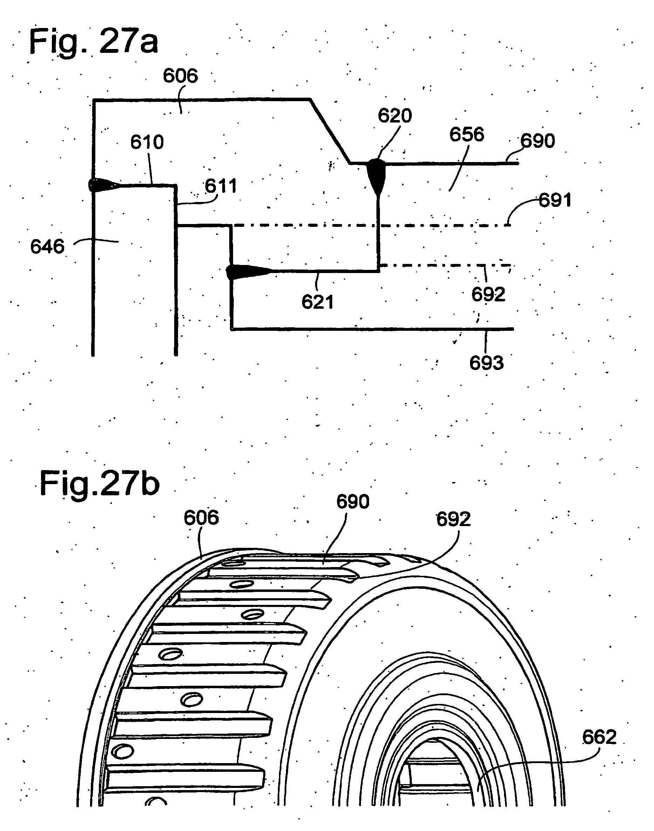

In den Figuren 27a, 27b ist eine weitere alternative Ausgestaltung des Ringelementes 606, sowie dessen Ankopplung am Außenlamellenträger 656 und die Ankopplung des Mitnehmers 646 am Ringelement dargestellt. Hierbei ist der Mitnehmer 646 gemäß Figur 24 axial in einen Endabschnitt des Ringelementes 606 eingeschoben und liegt mit seinem Außenumfang am radialen Anlagebereich 610 des Ringelementes 606 an, und mit seinem axialen Anlagebereich 611 an einem radial nach innen gerichteten Anschlag des Ringelementes 606. Der Mitnehmer 646 ist mit dem Ringelement 606 von axial aus Richtung Antriebseinheit verschweißt. Die Ankopplung des Ringelementes 606 mit dem Außenlamellenträger 656 erfolgt erfindungsgemäß durch Aufschieben des Ringelementes 606 auf einen axialen Endabschnitt des Außenlamellenträgers 656. Hierzu ist der Außenlamellenträger 656 an seinem axialen Endabschnitt mit einem am Außenumfang angebrachten Falz versehen. Der Falz wird vorzugsweise dadurch hergestellt, dass der Außenlamellenträger 656 am Außenumfang der Zahnköpfe 690 aufgespannt wird, und ein, das Ringelement 606 aufnehmender, Falz von radial außen her eingedreht wird. Die radiale Erstreckung des Falzes von außen her ist hierbei so bemessen, dass sowohl die Zahnköpfe 690 als auch die Zahnflanken weggedreht werden sowie der Außenumfang der Zahnböden 692 radial leicht angedreht werden, sodass der radiale Anlagebereich 621 auf einen definierten Außenradius abgedreht werden kann und eventuelle Radialtoleranzen des Außenlamellenträgers korrigiert werden können.

Durch dieses Abdrehen des Außenlamellenträgers 656 stehen im Aufnahmebereich des Ringelementes 606 nur noch die Zahnböden der Verzahnung des Außenlamellenträgers nach axial außen hin, welche dann das Ringelement 606 aufnehmen können. Zum Anschweißen des Ringelementes 606 am Außenlamellenträger 656 wird dieses auf die eben erwähnten angedrehten Zahnböden aufgeschoben, sodass das Ringelement 606 sowohl an seinem radialen Anlagebereich 621, wie auch am axialen Anlagebereich 620 am Außenlamellenträger 656 bündig anliegt. Hierbei ist sicher zu stellen, dass das Verzahnungsprofil am Innenumfang des Ringelementes 606 sich mit dem Verzahnungsprofil des Außenlamellenträgers deckt, sodass ein Einführen der Außenlamellenträger von axial her möglich bleibt. Zur Ausrichtung des Ringelementes 606 zum Außenlamellenträger 656 kann ein Montagewerkzeug genutzt werden, welches in den Außenlamellenträger eingeschoben wird und welches ein Außenverzahnungsprofil hat, welches dem der später einzufädelnden Außenlamellen entspricht. Das Verschweißen des Ringelementes am Außenlamellenträger erfolgt im Bereich der Zahnköpfe von radial außen her, sodass die Zahnköpfe mit dem Ringelement 606 fest verschweißt sind. Der radiale Anlagebereich 621 des Ringelementes 606 auf den Zahnböden des Außenlamellenträgers erfolgt hingegen von axial außen her, sodass insgesamt sowohl die Zahnböden als auch die Zahnköpfe mit dem Ringelement 606 fest verschweißt sind. Das Ringelement 606 ist weiterhin an seinen zu verschweißenden Kanten so ausgestaltet, dass in unmittelbarer Nachbarschaft des Schweißbereiches 620, 621 der radiale Außendurchmesser, beziehungsweise die axiale Erstreckung deckungsgleich mit dem Außenlamellenträger ist.

Zur exakten Ausgestaltung des radialen Anlagebereiches 610 sowie des axialen Anlagebereiches 611 des Ringelementes 606 wird der Außenlamellenträger wiederum aufgespannt und die Anlagebereiche des Ringelementes sauber herausgedreht. Zur Verhinderung von Achsversätzen zwischen dem Ringelement 606 und der Ölzuführnabe kann in einem weiteren Arbeitsschritt der Innenumfang des Außenlamellenträgers 662 ebenfalls auf einen definierten Radius ausgedreht werden.

Zur passgenauen Fertigung des Mitnehmers wird dieser am Ankoppelglied aufgespannt und die axialen und radialen Anlagebereiche des Mitnehmers, welche später im Mitnehmer zur Anlage kommen, auf ein genaues Maß abgedreht. Weiterhin wird der Axialanschlag zur Lamellenpaketabstützung des Mitnehmers auf ein definiertes axiales Maß bezüglich des axialen Anlagebereiches 611 des Mitnehmers abgedreht.

Da beim Verschweißen des Ringelements 606 am Außenlamellenträger 656 die zu verschweißenden Bereiche sich auf die radiale Außenkante der Zahnböden 692 beschränkt und dadurch keine umlaufebde Schweißnaht erzeugt wird, wird vorzugsweise beim Verschweißen ein Schweißwerkzeug axial bündig in den Außenlamellenträger eingeschoben , welches das o.g. Montagewerkzeug sein kann. Das Schweißwerkzeugs hat erfindungsgemäß zumindest im Bereich des Verzahnungsprofils eine reflektierende Oberfläche, sodass beim beim Laserschweißen im Bereich der Zahnflanken und Zahnköpfe 690 der Laserstrahl reflektiert wird und keine Schweißspritzer unkontrolliert in den Außenlamellenträgertopf gelangen können.

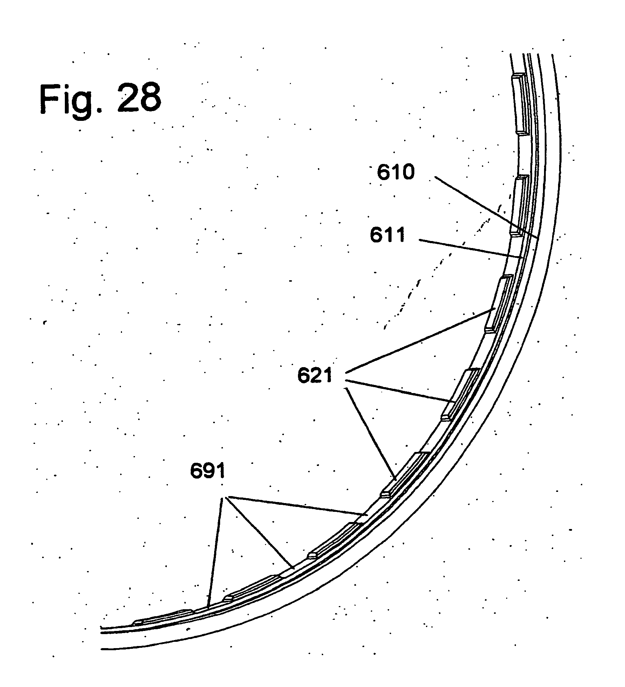

In Fig. 28 ist eine Teilansicht des Ringelementes aus Fig.27b dargestellt.
Deutlich zu erkennen ist das am Innenumfang des Ringelementes ausgestaltete Verzahnungsprofil. Die nach radial innen vorstehenden Zähne liegen im eingebauten Zustand auf den Zahnböden des Außenlamellenträgers auf und bilden den radialen Anlagebereich 621, welcher mit dem Außenlamellenträger verschweißt wird. Die Zahnzwischenräume des Ringelementes haben dementsprechend im Zusammenbau des Ringelementes mit dem Außenlamellenträger denselben Radius wie der Innenradius der Zahnköpfe 691 des Außenlamellenträgers. Weiterhin sind deutlich der radiale Anschlagbereich 610, sowie der axiale Anschlagbereich 611 zu erkennen, welche zur passgenauen Aufnahme des Mitnehmers dienen.

### Bezugszeichenliste

- 1.: Doppelkupplungseinrichtung
- 2.: erste Kupplungsanordnung
- 4.: zweite Kupplungsanordnung
- 6.: erste Getriebewelle
- 8.: zweite Getriebewelle
- 10.: Kupplungsgehäuse
- 12.: Verschlusswandung
- 14.: zentrale Öffnung
- 16.: Ankoppelglied
- 18.: Randbereich
- 20.: erste Radiallageranordnung
- 22.: Toleranzausgleichsvorrichtung
- 24.: zweite Lageranordnung
- 26.: erster Lagersitz
- 28.: zweiter Lagersitz
- 30.: Federelement
- 32.: Toleranzausgleichsscheibe
- 34.: Sicherungselement
- 36.: Axialgleitlager
- 38.: Nabe des Innenlamellenträgers der ersten Kupplungseinrichtung
- 40.: Axiallager
- 42.: Nabe des Innenlamellenträgers der zweiten Kupplungseinrichtung
- 44.: Axialsicherung
- 46.: Mitnehmer
- 48.: Bohrung
- 50.: Nut
- 52.: Schrägkugellager
- 54.: Sicherungselement
- 56.: Nadellager
- 58.: Außenlamellenträger
- 60.: Innenlamellenträger
- 61.: Betätigungskolben
- 62.: Ölzufuhrnabe
- 64.: Montagehilfe
- 65a.: erstes Teil der Montagehilfe
- 65b.: zweites Teil der Montagehilfe
- 66.: Außenlamellenträger der zweiten Kupplungsanordnung
- 68.: Dichtungselement
- 70.: Antriebselement
- 72.: Antriebselement
- 74.: Hydraulikeinheit
- 76.: Axialnut
- 78.: Zwischenbereich
- 80.: Axialbohrung
- 82.: Pilotlager
- 84.: Hakenelement
- 86.: Dichtungselement
- 88.: Verzahnungsprofil
- 89.: Verzahnungsprofil
- 90.: Zahnköpfe
- 92.: Zahnzwischenbereich
- 94.: Stege
- 96.: Berührkante
- 98.: Zahnflanke
- 100.: Ringteil
- 102.: Teilbereich
- 104.: Montagewerkzeug
- 106.: Ringelement
- 107.: Position
- 108: Zähne des Ringelementes
- 109.: Zahnboden
- 110.: Berührkante
- 116.: Innenumfang des Mitnehmers
- 162.: Innenumfang des Außenlamellenträgers
- 206.: Ringelement
- 207.: Position
- 208.: axialer Endabschnitt
- 209.: axialer Endabschnitt
- 246.: Mitnehmer
- 306.: Ringelement
- 308.: Endlamelle
- 310.: Anlagebereich
- 346.: Mitnehmer
- 416.: Ankoppelglied
- 424.: zweite Lageranordnung
- 426.: erster Lagersitz
- 428.: zweiter Lagersitz
- 462.: Ölzuführnabe
- 476.: Axialnut
- 480.: Axialbohrungen
- 482.: Radialbohrungen
- 483.: Radialbohrung
- 484.: Kupplungswelle
- 485.: Radialbohrungen
- 490: Kolbenraum
- 492.: Ringnut
- 506.: Ringelement
- 508.: Endlamelle
- 510.: Falz
- 546.: Mitnehmer
- 606.: Ringelement
- 610.: radialer Anlagebereich
- 611.: axialer Anlagebereich
- 620.: axialer Anlagebereich
- 621.: radialer Anlagebereich
- 656.: Außenlamellenträger
- 662.: Innenumfang des Außenlamellenträgers
- 690.: Außenradius der Zahnköpfe
- 691.: Innenradius der Zahnköpfe
- 692.: Außenradius der Zahnböden
- 693.: Innenradius der Zahnböden

## Patentansprüche

1. Doppelkupplungseinrichtung (1) für die Anordnung in einem Antriebsstrang eines Kraftfahrzeuges zwischen einer Antriebseinheit und einem Getriebe, wobei die Kupplungseinrichtung eine einer ersten Getriebeeingangswelle (6) des Getriebes zugeordnete erste Kupplungsanordnung (2) und eine einer zweiten Getriebeeingangswelle (8) des Getriebes zugeordnete zweite Kupplungsanordnung (4) aufweist zur Momentenübertragung zwischen der Antriebseinheit und dem Getriebe,
wobei der Kupplungseinrichtung ein gegebenenfalls eine Getriebegehäuseglocke umfassendes, am Getriebe stationär angeordnetes oder anbringbares Kupplungsgehäuse (10) zugeordnet ist zur Aufnahme der Kupplungseinrichtung darin, mit einer an dem Kupplungsgehäuse radial abgestützten oder abstützbaren Verschlusswandung (12), gegebenenfalls in Form eines Deckels, zum Verschließen einer Gehäuseöffnung, der eine zentrale Öffnung (14) aufweist, durch den sich ein zu einer Eingangsseite der Kupplungseinrichtung gehörendes Ankoppelglied (16) erstreckt, an dem die Antriebseinheit direkt oder indirekt, gegebenenfalls unter Vermittlung einer Torsionsschwingungsdämpferanordnung, angekoppelt oder ankoppelbar ist, wobei zwischen einem die Öffnung begrenzenden Randbereich (18) der Verschlusswandung (12) und dem Ankoppelglied (16) eine erste Radiallageranordnung (20) zur Lagerung der Kupplungseinrichtung vorgesehen ist, und
wobei mindestens eine zweite Lageranordnung (24) zur Lagerung der Kupplungseinrichtung zwischen einem mit dem Ankoppelglied (16) drehfest verbundenen ersten Lagersitz (26) und einem vom Getriebegehäuse gebildeten oder mit diesem fest verbundenen zweiten Lagersitz (28) vorgesehen ist;
**dadurch gekennzeichnet,**
**dass** zwischen der ersten Radiallageranordnung (20) und dem Kupplungsgehäuse (10) eine Toleranzausgleichsvorrichtung (22) vorgesehen ist, und
**dass** ein Mitnehmer (46) der Kupplungseinrichtung mit einem Außenlamellenträger (58) der Kupplungseinrichtung verschweißt ist.

2. Kupplungseinrichtung nach Anspruch 1, **dadurch gekennzeichnet, dass** die Toleranzausgleichsvorrichtung (22) zwischen der Verschlusswandung (12) und dem Kupplungsgehäuse (10) angeordnet ist.

3. Kupplungseinrichtung nach Anspruch 1, **dadurch gekennzeichnet, dass** die Toleranzausgleichsvorrichtung (22) ein Federelement (30) oder/und mindestens eine Toleranzausgleichsscheibe (32) aufweist.

4. Kupplungseinrichtung nach Anspruch 1, **dadurch gekennzeichnet, dass** die zweite Lageranordnung (24) als Radiallager ausgebildet ist.

5. Kupplungseinrichtung nach Anspruch 1, **dadurch gekennzeichnet, dass** die erste Radiallageranordnung (20) als eine erste Axialsicherung der Kupplungseinrichtung dient.

6. Kupplungseinrichtung nach Anspruch 1, **dadurch gekennzeichnet, dass** die erste Axialsicherung die Kupplungseinrichtung gegen ein Verschieben in Richtung Antriebseinheit sichert.

7. Kupplungseinrichtung nach Anspruch 6, **dadurch gekennzeichnet, dass** die erste Radiallageranordnung von einem Schrägkugellager (52) gebildet wird.

8. Kupplungseinrichtung nach Anspruch 5, **dadurch gekennzeichnet, dass** die erste Radiallageranordnung mittels mindestens eines Sicherungselementes (54) axial gesichert ist.

9. Kupplungseinrichtung nach Anspruch 1, **dadurch gekennzeichnet, dass** die zwei Lageranordnungen (20, 24) auf axial entgegengesetzten Seiten der Kupplungsanordnungen angebracht sind.

10. Kupplungseinrichtung nach Anspruch 5, **dadurch gekennzeichnet, dass** die zweite Lageranordnung (24) als Nadellager (56) ausgebildet ist.

11. Kupplungseinrichtung nach Anspruch 1, **dadurch gekennzeichnet, dass** der Mitnehmer (46) und der Außenlamellenträger (58) der Kupplungseinrichtung mit einem zwischen dem Mitnehmer (46) und dem Außenlamellenträger (58) angeordneten Ringelement (106) verschweißt sind.

## Claims

1. Double clutch device (1) for arrangement in a drive train of a motor vehicle between a drive unit and a transmission, the clutch device having a first clutch arrangement (2), assigned to a first transmission input shaft (6) of the transmission, and a second clutch arrangement (4), assigned to a second transmission input shaft (8) of the transmission, for the transfer of torque between the drive unit and the transmission, the clutch device being assigned, for the reception of the latter therein, a clutch housing (10) which, if appropriate, comprises a transmission housing bell and which is arranged or mountable on the transmission in a stationary manner, with a closing wall (12), if appropriate in the form of a cover, supported or supportable radially on the clutch housing, for closing a housing orifice, the said cover having a central orifice (14) through which extends a coupling member (16) which belongs to an input side of the clutch device and to which the drive unit is coupled or coupleable directly or indirectly, if appropriate with a torsional vibration damper arrangement being interposed, a first radial bearing arrangement (20) for matching the clutch device being provided between an edge region (18), delimiting the orifice, of the closing wall (12) and the coupling member (16), and at least one second bearing arrangement (24) for mounting the clutch device being provided between a first bearing seat (26) connected fixedly in terms of rotation to the coupling member (16) and a second bearing seat (28) formed by the transmission housing or connected fixedly to the latter; **characterized in that** a tolerance compensation device (22) is provided between the first radial bearing arrangement (20) and the clutch housing (10), and **in that** a driver (26) of the clutch device is welded to an external lamella carrier (58) of the clutch device.

2. Clutch device according to Claim 1, **characterized in that** the tolerance compensation device (22) is arranged between the closing wall (12) and the clutch housing (10).

3. Clutch device according to Claim 1, **characterized in that** the tolerance compensation device (22) has a spring element (30) and/or at least one tolerance compensation disc (32).

4. Clutch device according to Claim 1, **characterized in that** the second bearing arrangement (24) is designed as a radial bearing.

5. Clutch device according to Claim 1, **characterized in that** the first radial bearing arrangement (20) serves as a first axial securing means for the clutch device.

6. Clutch device according to Claim 1, **characterized in that** the first axial securing means secures the clutch device against displacement in the direction of the drive unit.

7. Clutch device according to Claim 6, **characterized in that** the first radial bearing arrangement is formed by an angular ball bearing (52).

8. Clutch device according to Claim 5, **characterized in that** the first radial bearing arrangement is secured axially by means of at least one securing element (54).

9. Clutch device according to Claim 1, **characterized in that** the two bearing arrangements (20, 24) are mounted on axially opposite sides of the clutch arrangements.

10. Clutch device according to Claim 5, **characterized in that** the second bearing arrangement (24) is designed as a needle bearing (56).

11. Clutch device according to Claim 1, **characterized in that** the driver (46) and the external lamella carrier (58) of the clutch device are welded to an annular element (106) arranged between the drive (46) and the external lamella carrier (58).

## Revendications

1. Dispositif d'embrayage double (1) pour un montage dans la chaîne cinématique d'entraînement d'un véhicule automobile entre une unité d'entraînement et une boîte de vitesses, dans lequel le dispositif d'embrayage présente un premier système d'embrayage (2) associé à un premier arbre d'entrée de boîte de vitesses (6) et un deuxième système d'embrayage (4) associé à un deuxième arbre d'entrée de boîte de vitesses (8), servant au transfert de couple entre l'unité d'entraînement et la boîte de vitesses, dans lequel un carter d'embrayage (10) disposé de manière fixe ou amovible sur la boîte de vitesses et comprenant éventuellement une cloche de boîte de vitesses est associé au dispositif d'embrayage afin d'abriter ce dernier, avec une paroi de fermeture (12), le cas échéant en forme de couvercle, et s'appuyant ou pouvant s'appuyer radialement contre le carter d'embrayage pour obturer une ouverture du carter qui présente une ouverture centrale (14) à travers laquelle s'étend un élément d'accouplement (16) appartenant à un côté d'entrée du dispositif d'embrayage, élément sur lequel l'unité d'entraînement est accouplée ou peut être accouplée directement ou indirectement, le cas échéant moyennant intervention d'un système amortisseur de vibrations torsionnelles, dans lequel un premier système de roulement radial (20) servant à l'appui du dispositif d'embrayage est prévu entre l'élément d'accouplement (16) et une zone périphérique (18) de la paroi de fermeture (12) et bordant l'ouverture, et
dans lequel au moins un deuxième système à roulement radial (24) servant à l'appui du dispositif d'embrayage est prévu entre un premier siège de roulement (26) relié de manière solidaire en rotation avec l'élément d'accouplement (16) et un deuxième siège de roulement (28) formé par le carter de boîte de vitesses ou relié à celui-ci de manière rigide; **caractérisé en ce qu'**un mécanisme de compensation des tolérances (22) est prévu entre le premier système à roulement radial (20) et le carter d'embrayage (10), et **en ce qu'**un entraîneur (46) du dispositif d'embrayage est soudé avec un support de disques extérieurs (58) du dispositif d'embrayage.

2. Dispositif d'embrayage selon la revendication 1, **caractérisé en ce que** le mécanisme de compensation des tolérances (22) est disposé entre la paroi de fermeture (12) et le carter d'embrayage (10).

3. Dispositif d'embrayage selon la revendication 1, **caractérisé en ce que** le mécanisme de compensation des tolérances (22) présente un élément élastique (30) et/ou au moins un disque de compensation des tolérances (32).

4. Dispositif d'embrayage selon la revendication 1, **caractérisé en ce que** le deuxième système à roulement (24) est réalisé sous la forme d'un roulement radial.

5. Dispositif d'embrayage selon la revendication 1, **caractérisé en ce que** le premier système à roulement radial (20) sert en tant que premier blocage axial du dispositif d'embrayage.

6. Dispositif d'embrayage selon la revendication 1, **caractérisé en ce que** le premier blocage axial empêche le dispositif d'embrayage de coulisser en direction de l'unité d'entraînement.

7. Dispositif d'embrayage selon la revendication 6, **caractérisé en ce que** le premier système à roulement radial est constitué par un roulement à billes à portée oblique (52).

8. Dispositif d'embrayage selon la revendication 5, **caractérisé en ce que** le premier système à roulement radial est bloqué axialement au moyen d'au moins un élément d'arrêt (54).

9. Dispositif d'embrayage selon la revendication 1, **caractérisé en ce que** les deux systèmes à roulement (20, 24) sont placés sur les côtés axialement opposés des systèmes d'embrayage.

10. Dispositif d'embrayage selon la revendication 5, **caractérisé en ce que** le deuxième système à roulement (24) est réalisé sous la forme d'un roulement à aiguilles (56).

11. Dispositif d'embrayage selon la revendication 1, **caractérisé en ce que** l'entraîneur (46) et le support de disques extérieurs (58) du dispositif d'embrayage sont soudés avec un élément annulaire (106) disposé entre l'entraîneur (46) et le support de disques extérieurs (58).
